# FASCICULE DE BREVET EUROPEEN

(11) **EP 3 870 408 B1**
(45) Date de publication et mention de la délivrance du brevet: **20.03.2024**
(21) Numéro de dépôt: 19813079.1
(22) Date de dépôt: 22.10.2019
(51) Int. Cl.: B25J 9/16

(54) **PROCÉDÉ DE MISE EN POUSSÉE SANS GLISSEMENT D'UN OUTIL À L'EXTRÉMITÉ D'UN BRAS ARTICULÉ CONTRE UNE SURFACE ET DISPOSITIF POUR SA MISE EN OEUVRE**
VERFAHREN ZUR BEWIRKUNG, DASS EIN WERKZEUG AM ENDE EINES GELENKARMS OHNE GLEITEN GEGEN EINE OBERFLÄCHE DRÜCKT, UND VORRICHTUNG ZUR DURCHFÜHRUNG DAVON
METHOD FOR CAUSING A TOOL AT THE END OF AN ARTICULATED ARM TO PRESS WITHOUT SLIPPING AGAINST A SURFACE, AND DEVICE FOR IMPLEMENTING SAME

(30) Priorité: 22.10.2018 FR 1859732
(43) Date de publication de la demande: 01.09.2021
(73) Titulaire: Advanced Electrical Tools, 59113 Seclin (FR)
(72) Inventeur: GUERIN, Sylvain, 59113 SECLIN (FR); GUERIN, Julien, 59147 GONDECOURT (FR)
(74) Mandataire: Bureau Duthoit Legros Associés
(86) Numéro de dépôt international: PCT/FR2019/052502
(87) Numéro de publication internationale: WO 2020/084243

(56) Documents cités:
- WO-A1-2016/174445
- WO-A1-2017/072466

## Description

La présente invention concerne un procédé de mise en poussée d'un outil à l'extrémité d'un bras articulé contre une surface ainsi qu'un dispositif pour la mise en oeuvre d'un tel procédé.

Le domaine de l'invention est celui du positionnement d'outil, par exemple un outil employé pour la réalisation d'opérations de perçage, d'usinage, de rivetage, soudage, etc. sur une surface à usiner, ledit outil étant positionné à l'extrémité d'un bras articulé, et notamment dans le domaine de l'aéronautique. Un tel outil est prévu pour être positionné au niveau de l'extrémité d'un bras articulé, lequel va effectuer l'ensemble des mouvements et appliquer les efforts nécessaires à la réalisation des opérations souhaitées.

Un tel bras articulé est bien connu de l'Homme du métier et est couramment employé dans l'aéronautique, notamment car il permet de se déplacer aisément autour d'une structure d'aéronef en cours d'assemblage.

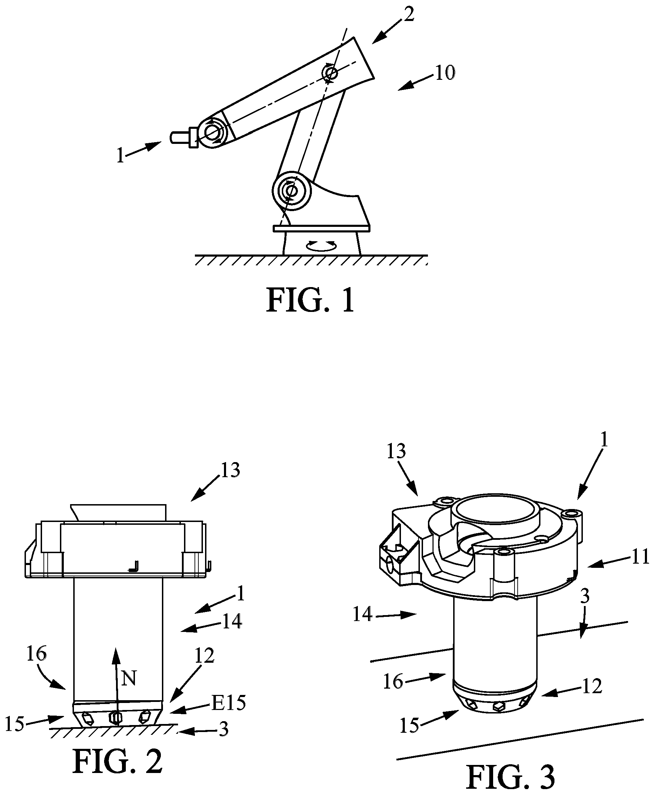

Comme visible sur la figure 1, un tel bras articulé comporte généralement une base pivotante sur laquelle est rapporté un premier segment configuré pour pivoter autour d'un premier axe de rotation horizontal, un deuxième segment étant articulé autour d'un deuxième axe de rotation horizontal par rapport à l'extrémité libre du premier segment. L'extrémité libre du deuxième segment comprend généralement une articulation, avec un, deux ou trois axes de rotation sensiblement perpendiculaires entre eux. Ces différentes articulations permettent de déplacer l'effecteur dans un espace à trois dimensions et selon trois axes de rotation.

Dans le domaine de l'aéronautique, les différentes pièces du fuselage doivent subir différentes opérations de fabrication afin de réaliser leur assemblage selon la configuration souhaitée. Ces opérations peuvent consister en des opérations de perçage, de rivetage, d'usinage, etc. et doivent être réalisées en une ou plusieurs positions précises de ladite pièce de fuselage. De plus, l'outil doit également effectuer un mouvement particulièrement précis et maîtrisé par rapport à ladite pièce de fuselage, les exigences en termes de qualité de fabrication dans le domaine aéronautique étant particulièrement élevées, et les tolérances de fabrication particulièrement réduites.

Notamment, pour les opérations de rivetage ou encore de perçage par exemple, l'outil doit être positionné selon une direction coïncidant sensiblement avec la normale à la surface de ladite pièce de fuselage. En outre, l'effort appliqué par l'outil sur ladite surface ne doit pas engendrer un glissement de l'outil par rapport à celle-ci, ce qui modifierait la position souhaitée de l'outil et donc nuirait à la qualité de fabrication obtenue.

Cependant, le fait d'appliquer un effort selon une direction sensiblement normale à la surface va engendrer des déformations de la surface de la pièce de fuselage, notamment en flexion. De plus, l'effort de réaction de ladite surface sur l'outil va également engendrer des déformations au niveau des articulations du bras articulé. Toutes ces déformations vont avoir tendance à modifier l'orientation de l'outil par rapport à ladite surface, ce qui va également augmenter les risques de glissement de l'outil par rapport à celle-ci.

Afin de remédier à ce glissement, et de s'assurer que l'outil conserve l'orientation souhaitée par rapport à la surface de la pièce de fuselage à usiner, on connaît du document WO 2007/090981 A2 un procédé de positionnement par rapport à une surface d'un effecteur comportant au moins un outil prévu pour effectuer une étape d'assemblage, ledit effecteur étant rapporté à l'extrémité d'un bras articulé susceptible d'appliquer par l'intermédiaire dudit effecteur un effort à l'encontre de ladite surface, ledit effecteur comportant une paroi frontale en regard de ladite surface.

Un tel procédé comprend les étapes :
- mesurer un mouvement relatif entre la paroi frontale et une plaque d'appui comportant au moins une partie susceptible de prendre appui directement ou indirectement contre la surface et d'être immobile par rapport à ladite surface, ladite plaque d'appui étant reliée à la plaque frontale de manière à pouvoir se déplacer selon au moins une direction parallèle à ladite paroi, et
- commander ledit bras articulé afin qu'il effectue un mouvement visant à compenser le mouvement relatif mesuré.

Selon un mode de réalisation de ce procédé, le procédé consiste à mesurer l'angle de pivotement entre une première partie solidaire de la plaque d'appui et une seconde partie susceptible d'être plaquée et immobile par rapport à la surface, la liaison entre lesdites parties, formant une rotule, autorisant un mouvement relatif selon au moins un axe de pivotement, et à commander ledit bras articulé afin qu'il effectue un mouvement visant à corriger l'angle de pivotement mesuré.

Ainsi, dans un tel dispositif et avec un tel procédé, le glissement n'intervient pas entre ladite surface et l'effecteur mais entre la plaque d'appui et l'effecteur. Les moyens permettant de mesurer les mouvements relatifs entre la plaque d'appui et l'effecteur permettent ensuite de compenser ce mouvement relatif grâce à des mouvements opposés du bras articulé.

De plus, par l'emploi de ladite rotule et des moyens pour mesurer l'angle de pivotement relatif entre la première partie et la deuxième partie de ladite rotule, les moyens de pilotage du bras articulé commandent la ou les articulations dudit bras articulé afin de corriger ledit pivotement relatif entre les deux parties de la rotule pour que l'outil soit disposé selon la normale à la surface.

Néanmoins, un tel procédé et un tel dispositif présentent plusieurs inconvénients.

Premièrement, ils ne sont pas prévus pour empêcher le glissement de l'outil sur ladite surface, mais pour compenser un éventuel glissement de l'outil sur ladite surface. Or, la qualité de cette compensation sera nécessairement limitée par les erreurs induites par les moyens de mesure et les moyens de calcul de la compensation à appliquer. De ce fait, malgré la compensation du glissement, la position souhaitée de l'outil peut être perdue au cours des opérations de fabrication subies par ladite pièce de fuselage.

De plus, le procédé décrit dans le document WO 2007/090981 A2 nécessitant la compensation combinée des mouvements de translation selon un plan parallèle à la surface du fuselage et des mouvements de rotation par rapport à la normale à ladite surface, celui-ci doit être mis en oeuvre par un nombre important de moyens, ce qui augmente l'encombrement du dispositif mettant un oeuvre un tel procédé, ainsi que sa complexité de réalisation et son coût de revient.

Enfin, les deux mouvements de correction, en translation et en rotation, ne peuvent pas être effectués en même temps, et doivent donc l'être consécutivement, ce qui augmente le temps de réalisation d'un tel procédé.

On connaît également un procédé et un appareil pour effectuer des opérations de perçage du document WO 2016/174445 A1.

Ainsi, le but de la présente invention est de proposer un procédé plus fiable de mise en poussée sans glissement d'un outil à l'extrémité d'un bras articulé contre une surface permettant l'application d'un effort donné par l'outil sur une surface à usiner sans que l'outil ne glisse sur ladite surface.

Un autre but de la présente invention est de proposer un tel procédé simple et rapide à mettre en oeuvre, et présentant un faible coût de revient.

Un autre but de la présente invention est de proposer un dispositif permettant la mise en oeuvre d'un tel procédé qui soit de conception simple et d'encombrement réduit, ainsi qu'avec un faible coût de revient.

Ainsi, l'invention concerne un procédé de mise en poussée avec un effort F selon un axe A d'un outil à l'extrémité d'un bras articulé contre une surface de normale N, comprenant les étapes :
(a) mise en position de l'outil contre ladite surface, de sorte à faire coïncider l'axe B de l'outil avec ledit axe A de l'effort F, l'axe A étant orienté selon un couple d'angles (Θ0, β0) par rapport à la normale N,
(b) application à l'outil d'un effort croissant jusqu'à atteindre une valeur Fn, correspondant à une fraction de l'effort F, la valeur de l'effort Fn appliqué étant contrôlée par l'intermédiaire de moyens pour mesurer l'effort de réaction de la surface sur l'outil,
(c) mesure du couple d'angles (Θn, βn) de l'axe B de l'outil par rapport à la normale N, après avoir atteint ladite valeur d'effort Fn,
(d) réorientation de l'outil de telle sorte que son axe B retrouve ladite orientation selon ledit couple d'angles (Θ0, β0) par rapport à la normale N.

Selon l'invention, on procède par itération, par répétition des étapes (b) à (d), en augmentant progressivement l'effort Fn à chaque itération, et jusqu'à atteindre la valeur d'effort F, l'incrément d'augmentation ΔFn entre deux paliers Fn successifs correspondant à la différence entre la valeur Fn d'une itération et la valeur Fn-1 de l'itération précédente, ledit incrément ΔFn étant inférieur à une valeur déterminée, de sorte à empêcher le glissement de l'outil sur la surface tout au long du procédé, depuis la mise en position de l'outil sur la surface au cours de l'étape (a) et jusqu'à l'obtention de l'effort F souhaité à l'issue de l'étape (d) de la dernière itération du procédé.

Ainsi, à chaque itération, un effort de précontrainte de valeur Fn-1, orienté selon l'axe A est appliqué à l'outil, lequel stabilise la position de l'outil contre la surface et permet l'application d'un incrément d'augmentation ΔFn de valeur limitée, et jusqu'à parvenir à ladite valeur Fn définie, telle que l'effort de réaction résultant appliqué par la surface sur l'outil demeure dans le cône de frottement de l'outil sur la surface, ne générant pas un glissement de l'outil sur la surface.

Selon des caractéristiques optionnelles du procédé selon l'invention, prises seules ou en combinaison :
- l'axe A de l'effort de poussée F correspond à la normale N à la surface, de telle sorte que ledit couple d'angles corresponde à (Θ0=0°, β0=0°),
- l'incrément d'augmentation ΔFn entre deux paliers Fn successifs est constant,
- l'incrément d'augmentation ΔFn entre deux paliers Fn successifs est non constant, croissant,
- l'outil est un outil de perçage.

L'invention concerne également un dispositif comprenant un outil avec :
- un corps de support muni de moyens pour mesurer un effort de réaction d'une surface sur ledit outil, lorsque l'outil appuie contre ladite surface,
- des moyens d'appui de l'outil contre ladite surface, configurés de sorte à réaliser l'appui de l'outil sur ladite surface avec une orientation variable de l'axe B de l'outil par rapport à la normale N à la surface,
- des moyens pour mesurer ladite orientation de l'axe B de l'outil par rapport à la normale N de ladite surface,
- une partie opérationnelle d'outil, destinée à être mise en oeuvre pour effectuer une opération de fabrication sur ladite surface.

Selon l'invention, ledit dispositif comprend également un bras articulé à l'extrémité duquel est fixé ledit outil, le bras articulé étant configuré de sorte à appliquer un effort de poussée d'axe A à l'outil, et des moyens de contrôle configurés pour la mise en oeuvre des étapes du procédé de mise en poussée de l'outil selon l'un des modes de réalisation du procédé selon l'invention.

Selon des caractéristiques optionnelles du dispositif selon l'invention, prises seules ou en combinaison :
- les moyens d'appui de l'outil contre ladite surface comprennent une rotule comprenant une première partie présentant une extrémité destinée à appuyer contre ladite surface et une deuxième partie fixée rigidement au corps de support, la première partie étant articulée par rapport à la deuxième partie selon trois degrés de liberté, avec un centre de rotation,
- ladite rotule est configurée de sorte que le centre de rotation de la rotule soit disposé au niveau de la surface lorsque l'extrémité de la première partie de la rotule est appuyée contre ladite surface,
- les deux parties de la rotule sont configurées de sorte à constituer un fourreau traversé, au moins partiellement par la partie opérationnelle de l'outil,
- le corps de support est de forme sensiblement cylindrique.

L'invention concerne encore un procédé de mise en poussée avec un effort F' selon un axe A' d'un outil à l'extrémité d'un bras articulé contre une surface de normale N', dans lequel l'outil est apte à pivoter par rapport à la surface lorsque mis en position contre ladite surface, selon deux centres de rotation distincts : un premier centre de rotation situé sur ladite surface et un deuxième centre de rotation écarté de ladite surface,
ledit procédé comprenant les étapes :
(a') mise en position de l'outil contre ladite surface, de sorte à faire coïncider l'axe B' de l'outil avec ledit axe A' de l'effort F', l'axe A' étant orienté selon un couple d'angles (A0, B0) par rapport à la normale N' et la droite (O'O18) étant orienté selon un couple d'angle (C0, D0) par rapport à l'axe B' de l'outil 1',
(b') application à l'outil d'un effort croissant jusqu'à atteindre une valeur Fn', correspondant à une fraction de l'effort F', la valeur de l'effort Fn' appliqué étant contrôlée par l'intermédiaire de moyens pour mesurer l'effort de réaction de la surface sur l'outil,
(c') après avoir atteint ladite valeur d'effort Fn' :
   - mesure du couple d'angles (An, Bn) de l'inclinaison de la normale N' de la surface par rapport à l'axe B' de l'outil, et
   - mesure du couple d'angles (Cn, Dn) de l'inclinaison de la droite (O'O18) par rapport à l'axe B' de l'outil,
(d') réorientation de l'outil par rapport à la surface selon deux rotations combinées autour de chacun des deux centres de rotation (O', O18) de telle sorte que :
   - l'axe B' de l'outil retrouve ladite orientation selon ledit couple d'angles (A0, B0) par rapport à la normale N' à la surface,
   - le couple d'angles (Cn, Dn) prenne la valeur (0°, 0°), de sorte à assurer l'alignement de la droite (O'O18) avec l'axe B' de l'outil.

Selon l'invention, on procède par itération, par répétition des étapes (b') à (d'), en augmentant progressivement l'effort Fn' à chaque itération, et jusqu'à atteindre la valeur d'effort F', l'incrément d'augmentation ΔFn' entre deux paliers Fn' successifs correspondant à la différence entre la valeur Fn' d'une itération et la valeur Fn'-1 de l'itération précédente, ledit incrément étant inférieur à une valeur déterminée, de sorte à empêcher le glissement de l'outil sur la surface tout au long du procédé, depuis la mise en position de l'outil sur la surface au cours de l'étape (a') et jusqu'à l'obtention de l'effort F' souhaité à l'issue de l'étape (d') de la dernière itération du procédé.

Selon des caractéristiques optionnelles du procédé selon l'invention, prises seules ou en combinaison :
- l'axe A' de l'effort de poussée F' correspond à la normale N' à la surface, de telle sorte que ledit couple d'angles (A0, B0) correspond à la valeur (0°, 0°) ;- selon une première alternative l'incrément d'augmentation ΔFn' est constant, ou, selon une deuxième alternative, l'incrément d'augmentation ΔFn' entre deux paliers Fn' successifs est non constant, croissant ;
- à la fin de l'étape (a') et au cours de chacune des étapes (b') à (d'), le deuxième centre de rotation est positionné à l'opposé de l'outil par rapport à la surface ;

L'invention concerne également un dispositif comprenant un outil avec :
- un corps de support muni de moyens pour mesurer un effort de réaction R' d'une surface sur ledit outil, lorsque l'outil appuie contre ladite surface,
- des moyens d'appui de l'outil contre ladite surface, configurés de sorte à réaliser l'appui de l'outil sur ladite surface avec une orientation variable de l'axe B' de l'outil par rapport à la surface, selon deux centres de rotation distincts : ledit premier centre de rotation étant situé au niveau de ladite surface et ledit deuxième centre de rotation écarté de ladite surface,
- des premiers moyens de mesure configurés pour mesurer ladite orientation de la normale N' de la surface par rapport à l'axe B' de l'outil, et
- des deuxièmes moyens de mesure configurés pour mesurer l'orientation de la droite (O'O18) par rapport à l'axe B' de l'outil,
- une partie opérationnelle d'outil, destinée à être mise en oeuvre pour effectuer une opération de fabrication sur ladite surface,

Selon l'invention, ledit dispositif comprend également un bras articulé à l'extrémité duquel est fixé ledit outil, le bras articulé étant configuré de sorte à appliquer un effort de poussée d'axe A' à l'outil, et des moyens de contrôle configurés pour la mise en oeuvre des étapes du procédé de mise en poussée de l'outil selon l'invention.

Selon des caractéristiques optionnelles du dispositif selon l'invention, prises seules ou en combinaison :
- les moyens d'appui de l'outil contre ladite surface comprennent :
   - une première rotule de centre de rotation correspondant audit premier centre de rotation de l'axe B' de l'outil par rapport à la surface, comprenant une première partie présentant une extrémité destinée à appuyer contre ladite surface et une deuxième partie solidaire d'une pièce intermédiaire entre ladite première partie et le corps de support, la première partie étant articulée par rapport à la deuxième partie selon au moins deux degrés de liberté, et
   - une deuxième rotule de centre de rotation correspondant audit premier centre de rotation de l'axe B' de l'outil par rapport à la surface, comprenant une première partie rigidement fixée à ladite pièce intermédiaire et une deuxième partie rigidement fixée au corps de support, la première partie étant articulée par rapport à la deuxième partie selon au moins deux degrés de liberté ;
- la première partie de la première rotule comprend une portion formant sensiblement une portion de sphère convexe, et notamment une demi-sphère, depuis laquelle s'étend, d'un côté, l'extrémité destinée à appuyer contre la surface, ainsi que, de l'autre côté, un premier fourreau, configuré pour recevoir intérieurement, au moins partiellement, la partie opérationnelle de l'outil, les premiers moyens pour mesurer l'orientation de la normale N' à la surface par rapport à l'axe B' de l'outil étant configurés de sorte à mesurer le déplacement dudit premier fourreau par rapport au corps de support, et ladite deuxième partie de la première rotule comprend une portion formant sensiblement une portion de sphère concave, et notamment une demi-sphère, ménagée sur ladite pièce intermédiaire, et configurée pour coopérer avec ladite portion de la première partie de la première rotule, et la première partie de la deuxième rotule comprend une portion formant sensiblement une portion de sphère convexe ménagée sur ladite pièce intermédiaire, et notamment une demi-sphère depuis laquelle s'étend, à l'opposé de l'extrémité de la première partie de la première rotule un fourreau, recevant intérieurement le premier fourreau de la première partie de la première rotule, les deuxièmes moyens pour mesurer l'orientation de l'orientation de la droite (O'O18) de l'outil par rapport à l'axe B' de l'outil étant configurés de sorte à mesurer le déplacement dudit deuxième fourreau par rapport au corps de support ;
- ladite première rotule est configurée de sorte que le premier centre de rotation de la première rotule soit disposé au niveau de la surface lorsque l'extrémité de la première partie de la première rotule est appuyée contre ladite surface, et ladite deuxième rotule est configurée de sorte que le deuxième centre de rotation de la deuxième rotule est écarté de la surface et positionné à l'opposé de l'outil par rapport à la surface, lorsque l'extrémité de la première partie de la rotule est appuyée contre ladite surface.

L'invention concerne enfin un outil destiné à être positionné à l'extrémité d'un bras articulé pour être mis en poussée avec un effort F' selon un axe A' contre une surface de normale N', dans lequel l'outil est apte à pivoter par rapport à la surface lorsque mis en position contre ladite surface, selon deux centres de rotation distincts : un premier centre de rotation situé sur ladite surface et un deuxième centre de rotation écarté de ladite surface, ledit outil comprenant :
- un corps de support muni de moyens pour mesurer un effort de réaction R' d'une surface sur ledit outil, lorsque l'outil appuie contre ladite surface,
- des moyens d'appui de l'outil contre ladite surface, configurés de sorte à réaliser l'appui de l'outil sur ladite surface avec une orientation variable de l'axe B' de l'outil par rapport à la surface, selon deux centres de rotation distincts : ledit premier centre de rotation situé sur ladite surface et ledit deuxième centre de rotation écarté de ladite surface,
- des premiers moyens de mesure configurés pour mesurer ladite orientation de la normale N' de la surface par rapport à l'axe B' de l'outil, et
- des deuxièmes moyens de mesure configurés pour mesurer l'orientation de la droite (O'O18) par rapport à l'axe B' de l'outil, dans lequel les moyens d'appui de l'outil contre ladite surface comprennent :
   - une première rotule de centre de rotation correspondant audit premier centre de rotation de l'axe B' de l'outil par rapport à la surface, comprenant une première partie présentant une extrémité destinée à appuyer contre ladite surface et une deuxième partie solidaire d'une pièce intermédiaire entre ladite première partie et le corps de support, la première partie étant articulée par rapport à la deuxième partie selon au moins deux degrés de liberté, et
   - une deuxième rotule de centre de rotation correspondant audit deuxième centre de rotation de l'axe B' de l'outil par rapport à la surface, comprenant une première partie rigidement fixée à ladite pièce intermédiaire et une deuxième partie rigidement fixée au corps de support, la première partie étant articulée par rapport à la deuxième partie selon au moins deux degrés de liberté.

L'invention sera mieux comprise à la lecture de la description suivante accompagnée des dessins parmi lesquels :
- la figure 1 est une vue schématique du dispositif selon un mode de réalisation conforme à l'invention,
- la figure 2 est une vue de face de l'outil du dispositif de la figure 1,
- la figure 3 est une vue en perspective de l'outil de la figure 2,
- la figure 4 est une vue en coupe selon la ligne 4-4 de la figure 2,
- les figures 5a à 5i représentent schématiquement différentes étapes successives du procédé selon un mode de réalisation conforme à l'invention, avec plusieurs itérations des étapes (b) à (d),
- la figure 6 représente les chronogrammes des différentes valeurs prises par l'angle Θn et par l'effort Fn au cours du procédé des figures 5a à 5i,
- la figure 7 représente de façon schématique l'orientation de l'axe de l'outil du dispositif de la figure 2 dans un repère cartésien,
- la figure 8 représente de façon schématique, sous la forme d'un logigramme le procédé selon un mode de réalisation conforme à l'invention,
- la figure 9 est une vue schématique du dispositif selon un mode de réalisation conforme à l'invention,
- la figure 10 est une vue en perspective de l'outil de la figure 9,
- les figures 11a et 11b sont des une vues en coupe selon la ligne 11-11 de la figure 10, l'outil étant dans deux position distinctes par rapport à la surface
- les figures 12a à 12i représentent schématiquement différentes étapes successives du procédé selon un mode de réalisation conforme à l'invention, avec plusieurs itérations des étapes (b') à (d'),
- la figure 13 représente les chronogrammes des différentes valeurs prises par l'angle An et par l'angle Cn et par l'effort Fn' au cours du procédé des figures 12a à 12i,
- la figure 14 représente de façon schématique l'orientation de l'axe de l'outil du dispositif de la figure 9 dans un repère cartésien,
- la figure 15 représente de façon schématique, sous la forme d'un logigramme le procédé selon un mode de réalisation conforme à l'invention.

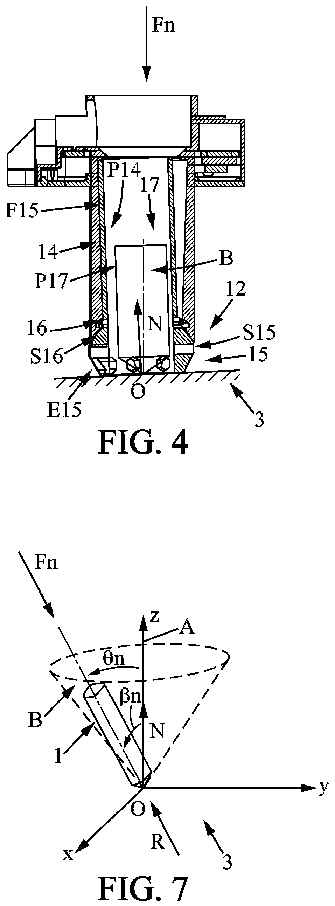

Dans la présente demande, on définit un repère cartésien (O,x,y,z), comme représenté sur la figure 7, dans lequel le centre O correspond au point de contact de la partie opérationnelle 17 de l'outil 1, ci-après dénommé pointe O de l'outil 1 en contact avec la surface 3, le plan (Oxy) correspond au plan de la surface 3, et l'axe (Oz) correspond à la normale N à ladite surface 3, lorsque celle-ci est au repos, c'est-à-dire ne recevant aucune sollicitation extérieure.

L'invention concerne un procédé de mise en poussée avec un effort F selon un axe A d'un outil 1 à l'extrémité d'un bras articulé 2 contre une surface 3 de normale N, comprenant les étapes :
(a) mise en position de l'outil 1 contre ladite surface, de sorte à faire coïncider l'axe B de l'outil avec ledit axe A de l'effort F, l'axe A étant orienté selon un couple d'angles (Θ0, β0) par rapport à la normale N,
(b) application à l'outil 1 d'un effort croissant jusqu'à atteindre une valeur Fn, correspondant à une fraction de l'effort F, la valeur de l'effort Fn appliqué étant contrôlée par l'intermédiaire de moyens pour mesurer l'effort de réaction R de la surface 3 sur l'outil 1,
(c) mesure du couple d'angles (Θn, βn) de l'axe B de l'outil par rapport à la normale N, après avoir atteint ladite valeur d'effort Fn,
(d) réorientation de l'outil 1 de telle sorte que son axe B retrouve ladite orientation selon ledit couple d'angles (Θ0, β0) par rapport à la normale N.

Selon l'invention, on procède par itération, par répétition des étapes (b) à (d), en augmentant progressivement l'effort Fn à chaque itération, et jusqu'à atteindre la valeur d'effort F, l'incrément d'augmentation ΔFn entre deux paliers successifs correspondant à la différence entre la valeur Fn d'une itération et la valeur Fn-1 de l'itération précédente, ledit incrément ΔFn étant inférieur à une valeur déterminée, de sorte à empêcher le glissement de l'outil 1 sur la surface 3 tout au long du procédé, depuis la mise en position de l'outil 1 sur la surface 3 au cours de l'étape (a) et jusqu'à l'obtention de l'effort F souhaité à l'issue de l'étape (d) de la dernière itération du procédé.

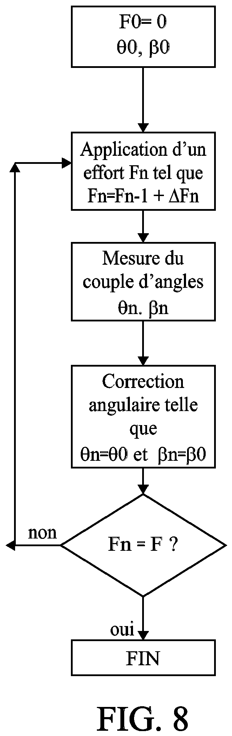

Comme expliqué plus haut, et comme représenté de façon schématique sur la figure 8, à chaque itération, un effort de précontrainte de valeur Fn-1, orienté selon l'axe A est appliqué à l'outil 1, lequel va stabiliser la position de l'outil 1 contre la surface 3 et permettre l'application d'un incrément d'augmentation ΔFn de valeur limitée et jusqu'à parvenir à ladite valeur Fn définie, telle que l'effort de réaction R résultant appliqué par la surface 3 sur l'outil 1 demeure dans le cône de frottement CF de l'outil 1 sur la surface 3, ne générant pas un glissement de l'outil 1 sur la surface 3.

Ainsi, grâce au procédé selon l'invention, on empêche le glissement de l'outil 1, notamment de sa pointe O sur la surface 3. On peut ainsi être certain que l'outil 1 conservera la position souhaitée à l'issue de l'opération de fabrication réalisée par ledit outil 1, sa pointe O n'ayant pas déviée de sa position initiale une fois la valeur F de l'effort de mise en poussée nécessaire à ladite opération atteinte.

Avantageusement, la valeur de l'effort F de mise en poussée de l'outil 1 contre la surface 3, est déterminée de sorte que celle-ci soit supérieure à la valeur de l'effort appliqué par la partie opérationnelle 17 de l'outil 1 sur la surface 3 lors de ladite opération, afin de s'assurer que l'outil 1 ne glisse pas sur la surface 3 lors de la mise en oeuvre de cette opération.

Avantageusement, on n'autorise pas le glissement pour le compenser ensuite, comme décrit par exemple dans le document WO 2007/09081 A2 : il n'y a pas d'incertitude liée aux moyens de mesure quant à la valeur exacte de la course de glissement à compenser pour remettre la pointe O de l'outil 1 dans la positon souhaitée.

De plus, on s'assure également que l'effort de poussée F est appliqué selon l'axe A souhaitée, l'orientation de l'axe B de l'outil 1 étant corrigée tout au long du procédé.

En effet, l'effort de poussée Fn appliqué à l'outil selon son axe B met en appui l'outil 1 contre la surface 3, laquelle exerce ainsi un effort de réaction R sur l'outil 1, également orienté selon l'axe B de l'outil, avec une composante selon la normale N à la surface 3 et une composante selon une direction orthogonale à ladite normale N à la surface 3, dépendant du frottement de l'outil 1 sur la surface 3. La valeur de cet effort de réaction R, correspondant à la valeur de l'effort Fn, est mesurée en permanence par les moyens pour mesurer l'effort de réaction R de la surface 3 sur l'outil 1.

Cet effort Fn appliqué sur la surface 3 va également entraîner la déformation locale de la surface 3, notamment en flexion, ce qui va modifier l'orientation de la normale N à la surface 3 par rapport au bras articulé, et donc faire dévier l'axe B de l'outil 1 de la direction A souhaitée, et fixée par le mouvement du bras articulé 2.

De plus l'effort de réaction R est transmis par l'outil 1 au bras articulé 2, et notamment aux articulations du bras articulé 2, les entraînant ainsi en rotation, et donc modifiant également l'orientation de l'axe B autour des axes (Ox) et (Oy) par rapport à la direction A souhaitée.

Ainsi, chaque valeur d'effort Fn, et donc l'incrément d'augmentation ΔFn, à chaque itération, est avantageusement fixée de telle sorte que l'effort de réaction R se trouve orienté de telle façon qu'il se retrouve à l'intérieur du cône de frottement CF de l'outil 1 sur la surface 3, comme représenté sur la figure 7.

Chacune de ces valeurs Fn et chacun des incréments d'augmentation ΔFn peuvent par exemple être déterminés de façon expérimentale.

Un exemple de réalisation du procédé selon l'invention est représenté sous la forme d'un logigramme à la figure 8.

Les conditions initiales correspondent à une orientation (Θ0, β0) de l'axe B de l'outil 1 par rapport à la normale N et à une application de la pointe de l'outil 1 selon un axe A avec un effort F0.

L'effort F0 peut par exemple être nul, ou encore, de façon avantageuse légèrement supérieur à 0, de sorte à assurer la stabilité de la pointe de l'outil 1 sur la surface 3.

Comme expliqué ci-dessus, grâce au procédé selon l'invention, il n'y a que des mouvements de rotation à effectuer pour compenser la perte de la position de l'axe B de l'outil souhaité, et aucun mouvement de translation, notamment comme décrit dans le document WO 2007/09081 A2.

De ce fait, le procédé est plus rapide à être mis en oeuvre.

Selon un mode de réalisation, l'axe A de l'effort de poussée F correspond à la normale N à la surface 3, de telle sorte que le couple d'angles, lors de l'étape initiale (a) correspond à (Θ0=0°, β0=0°).

En effet, le procédé selon l'invention trouve une application particulièrement avantageuse dans le cas où l'axe A de l'effort de poussée F correspond à la normale N à la surface 3.

Néanmoins, le procédé selon l'invention peut également être appliqué dans le cas où l'axe A de l'effort de poussée F dévie de la normale N à la surface 3, mais néanmoins de façon limitée, afin de ne pas entraîner le glissement de l'outil 1 sur la surface 3.

Dans la suite de la description, pour plus de simplicité et donc de clarté, on décrira en détail le cas où l'axe A de l'effort de poussée F correspond à la normale N à la surface 3, sauf précisions contraires.

Selon un mode de réalisation, l'incrément d'augmentation ΔFn entre deux paliers Fn successifs est constant.

Ainsi, l'écart entre deux paliers Fn successifs est constant, notamment tout au long du procédé, ce qui simplifie sa mise en oeuvre.

Selon un mode de réalisation, l'incrément d'augmentation ΔFn entre deux paliers Fn successifs est non constant, croissant.

Ainsi, plus la valeur de l'effort Fn se rapproche de la valeur F souhaitée, plus l'écart entre deux paliers Fn successifs augmente.

Grâce à cette disposition avantageuse de l'invention, le temps de mise en oeuvre du procédé selon l'invention, jusqu'à parvenir à la valeur F de l'effort de poussée souhaité peut être réduite, notamment par rapport au mode de réalisation dans lequel l'écart entre deux paliers Fn successifs est constant.

Selon les constatations de l'inventeur, cette disposition avantageuse de l'invention est rendue possible grâce au fait que, plus l'effort de précontrainte Fn-1 appliqué à l'outil 1 à chaque itération est important, plus il est possible d'appliquer un incrément d'augmentation d'effort ΔFn important à l'outil 1 avant que l'effort de réaction R de la surface 3 sur l'outil 1 ne se trouve hors du cône de frottement CF, et donc que l'outil 1 ne glisse sur la surface 3.

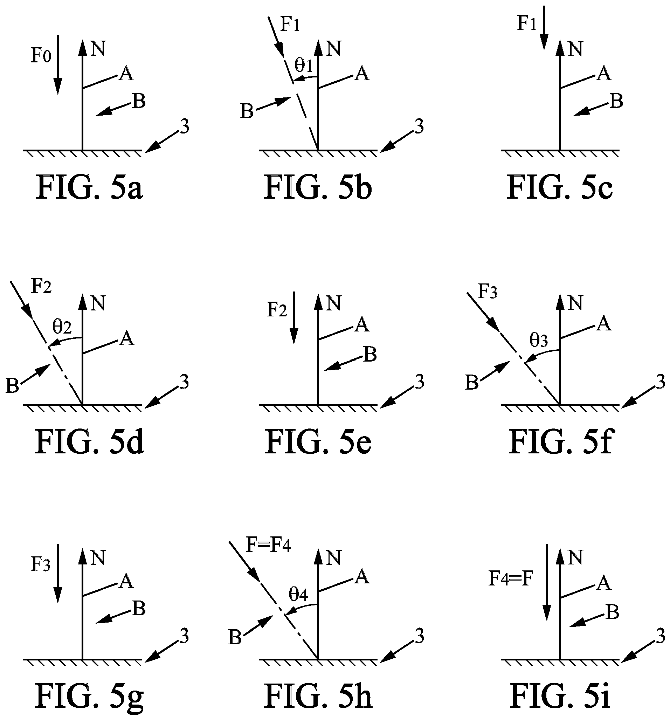

Ce mode de réalisation est par exemple représenté de façon schématique sur les figures 5a à 5i, sur lesquels on applique quatre paliers successifs d'effort Fn croissant, tels que F1<F2<F3<F4=F, les incréments d'augmentation d'efforts ΔFn successifs étant également croissants.

Pour des raisons de clarté, les déformations de la surface 3 ne sont pas représentées sur les différentes figures 5a à 5i.

Egalement, pour plus de clarté, on a représenté les mouvements de l'outil 1 dans le plan (Oxz) tel que défini plus haut avec uniquement l'orientation par rapport à la normale N à la surface 3 de l'axe B de l'outil 1 autour de l'axe (Oy), avec l'angle Θn.

L'outil 1 se trouve en position initiale sur la figure 5a, correspondant à l'étape (a) du procédé, avec son axe B aligné avec la normale N.

La première itération du procédé avec la première succession des étapes (b) à (d) est ensuite représentée sur les figures 5b et 5c, la figure 5b représentant l'outil 1 dans sa position à l'issue de l'étape (b), son axe B étant orienté selon le couple d'angles (Θn, βn), tandis que la figure 5c représente l'outil 1 dans sa position à l'issue de l'étape (d).

La deuxième itération du procédé avec la deuxième succession des étapes (b) à (d) est représentée sur les figures 5d et 5e, la troisième sur les figures 5f et 5g, et la quatrième et dernière sur les figures 5h et 5i.

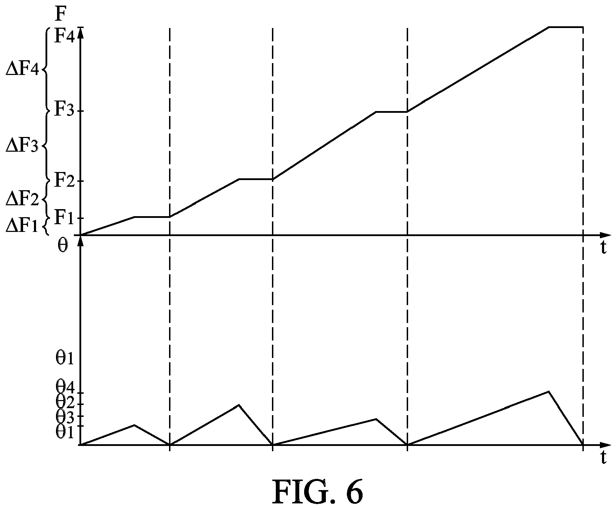

Les chronogrammes représentés sur la figure 6 représentent la valeur de l'effort Fn appliqué à l'outil 1 au cours des quatre itérations du procédé décrites ci-dessus, avec les quatre paliers successifs croissants F1 à F4, ainsi que la variation de la valeur de l'angle Θn. Pour plus de simplicité, la variation de la valeur de l'angle βn au cours du temps n'est pas représentée.

Comme représenté sur le chronogramme du haut de la figure 6, l'effort Fn peut être appliqué au cours de chacune des itérations de façon croissante jusqu'à atteindre la valeur Fn souhaitée puis maintenu à cette valeur Fn jusqu'à la fin de l'étape (d), à l'issue de laquelle l'orientation de l'axe B de l'outil 1 par rapport à la normale N à la surface 3 est corrigée pour reprendre sa position initiale.

La variation de l'effort Fn et de chacun des angles Θn et βn au cours de chacune desdites itérations peut se faire plus ou moins rapidement, et de façon sensiblement linéaire, comme représenté sur la figure 6, ou de tout autre façon, notamment afin de gagner en précision et/ou en rapidité d'exécution.

Selon un mode de réalisation, l'outil 1 est un outil de perçage.

Alternativement, l'outil 1 peut être tout autre type d'outil employé dans le cadre de fabrication d'aéronefs, comme par exemple un outil de rivetage, de soudage, d'alésage, etc.

L'invention concerne également un dispositif 10 comprenant un outil 1 avec :
- un corps de support 11 muni de moyens pour mesurer un effort de réaction R d'une surface 3 sur ledit outil 1, lorsque l'outil 1 appuie contre ladite surface,
- des moyens d'appui 12 de l'outil 1 contre ladite surface 3, configurés de sorte à réaliser l'appui de l'outil 1 sur ladite surface 3 avec une orientation variable de l'axe B de l'outil 1 par rapport à la normale N à la surface 3,
- des moyens pour mesurer ladite orientation de l'axe B de l'outil 1 par rapport à la normale N à ladite surface 3,
- une partie opérationnelle d'outil 17, destinée à être mise en oeuvre pour effectuer une opération de fabrication sur ladite surface 3.

Selon l'invention, ledit dispositif 10 comprend également un bras articulé 2 à l'extrémité duquel est fixé l'outil 1, le bras articulé 2 étant configuré de sorte à appliquer un effort de poussée d'axe A à l'outil 1, et des moyens de contrôle configurés pour la mise en oeuvre des étapes du procédé de mise en poussée de l'outil 1 selon l'un des modes de réalisation décrit précédemment.

Le bras articulé 2 peut par exemple être un bras robotisé six axes.

L'ensemble des dispositions relatives au procédé décrit précédemment sont applicables au dispositif 10 selon l'invention.

Comme visible sur l'exemple de réalisation de la figure 1, le bras articulé 2 du dispositif 10 est un bras articulé robotisé employé de façon bien connue dans l'aéronautique pour réaliser de façon automatisée différentes opérations de fabrication d'un aéronef, tel que décrit précédemment.

L'orientation et le positionnement de l'outil 1, et donc de l'axe B de l'outil 1, dans l'espace (Oxyz) est réalisée grâce aux différentes articulations du bras articulé 2, des moyens de fixation étant prévus entre ledit outil 1 et l'extrémité du bras articulé 2 recevant celui-ci, configurés de sorte à assurer l'immobilisation de l'outil 1 par rapport au bras articulé 2.

La partie opérationnelle d'outil 17 est l'élément qui va réaliser en tant que tel l'opération de fabrication souhaitée sur ladite surface 3 de la pièce. La partie opérationnelle d'outil 17 peut par exemple être un foret dans le cas d'une opération de perçage, une fraise dans le cas d'une opération de fraisage, etc.

Ainsi, la partie opérationnelle de l'outil 17 peut être apte à se déplacer par rapport au corps de support 11 de l'outil 1, par exemple en étant mis en rotation autour de l'axe B de l'outil 1 et/ou en translatant le long dudit axe B, dans le cas d'un outil de perçage. Des moyens de mise en mouvement supplémentaires (non représentés) pouvant être prévus à cet effet.

De même la mise en poussée avec l'effort Fn de l'outil 1 contre la surface 3 peut être réalisée par l'intermédiaire du bras articulé 2 qui vient contraindre l'outil 1 contre la surface 3.

Notamment, lors du déroulement du procédé selon l'invention, la mise en position de l'outil 1 au cours de l'étape (a), l'application à l'outil 1 d'un effort Fn au cours de l'étape (b) et la réorientation de l'outil au cours de l'étape (d) peuvent être effectuées grâce aux mouvements du bras articulé 2, piloté par l'intermédiaire des moyens de contrôle.

Les moyens de contrôle non représentés peuvent par exemple comprendre un ou plusieurs circuits électroniques, configurés de sorte à recevoir les informations mesurées par les moyens pour mesurer un effort de réaction R de la surface 3 sur l'outil 1 et par les moyens pour mesurer l'orientation de l'axe B de l'outil 1 par rapport à la normale N à ladite surface 3, et à transmettre des signaux de commande au bras articulé 2 de sorte à exécuter ledit procédé.

Les moyens de contrôle peuvent par exemple comprendre des moyens informatiques.

Comme visible sur les exemples de réalisation des figures 2 à 4, le corps de support 11 de l'outil 1 peut comprendre une partie de fixation 13, configurée de sorte à assurer la fixation rigide de l'outil 1 à l'extrémité du bras articulé 2, par exemple par l'intermédiaire de vis de fixation.

Le corps de support 11 peut également comprendre une portion de réception 14 de la partie opérationnelle de l'outil 17, comportant par exemple une paroi intérieure P14, configurée pour autoriser le passage de la partie opérationnelle de l'outil 17 par rapport au corps de support 11.

Avantageusement, ladite paroi intérieure P14 est de forme correspondante à celle de la partie opérationnelle d'outil 17, par exemple cylindrique dans le cas d'une partie opérationnelle d'outil 17 de forme cylindrique.

La partie de fixation 13 peut être disposée au-dessus de la portion de réception 14 du corps de support 11 lorsque l'outil 1 est en appui sur la surface 3, dans sa position de fonctionnement pour la mise en oeuvre du procédé selon l'invention, comme visible sur les exemples de réalisation des figures 2 à 4.

Les moyens pour mesurer un effort de réaction R de la surface 3 sur l'outil 1 peuvent par exemple comprendre un ou plusieurs capteurs d'effort (par exemple des jauges de contrainte) disposé sur le corps de support 11, et notamment sur la portion de réception 14 de la partie opérationnelle de l'outil 17.

Alternativement ou en complément, lesdits moyens pour mesurer un effort de réaction R de la surface 3 sur l'outil 1 peuvent être disposés sur le bras articulé 2.

Les moyens pour mesurer l'orientation de l'axe B de l'outil 1 par rapport à la surface 3 peuvent par exemple comprendre un ou plusieurs capteurs angulaires disposés sur l'outil 1.

Avantageusement, lesdits moyens pour mesurer l'orientation de l'axe B de l'outil 1 par rapport à la surface 3 peuvent être configurés pour mesurer la modification de l'orientation des moyens d'appui 12 de l'outil 1 par rapport à la normale N à la surface 3, laquelle correspond à l'orientation de l'axe B de l'outil 1 par rapport à la surface 3.

Selon un mode de réalisation, les moyens d'appui 12 de l'outil 1 contre ladite surface 3 comprennent une rotule 12 comprenant une première partie 15 présentant une extrémité E15 destinée à appuyer contre ladite surface 3 et une deuxième partie 16 fixée rigidement au corps de support 11, la première partie 15 étant articulée par rapport à la deuxième partie 16 selon trois degrés de liberté, avec un centre de rotation O.

L'extrémité E15 à fonction d'appui peut être configurée de sorte à obtenir un appui circulaire, continu ou discontinu. L'appui circulaire peut par exemple être de diamètre inférieur à 5 cm, de préférence inférieur à 3 cm, et de préférence encore inférieur à 2 cm.

Selon un mode de réalisation, la première partie 15 de la rotule 12 peut comprendre une portion S15 formant sensiblement une portion de sphère convexe, et notamment une demi-sphère, depuis laquelle s'étend, d'un côté, l'extrémité E15 destinée à appuyer contre la surface 3, ainsi que, de l'autre côté, un fourreau F15, configuré pour recevoir intérieurement, au moins partiellement, la partie opérationnelle de l'outil 17, les moyens pour mesurer l'orientation de l'axe B de l'outil 1 par rapport à la surface 3 étant configurés de sorte à mesurer le déplacement dudit fourreau F15 par rapport au corps de support 11.

En effet, la variation angulaire des angles Θn et βn de l'axe B de l'outil 1 par rapport à la normale N à la surface 3 étant faible au cours de la mise en oeuvre du procédé selon l'invention, par exemple de l'ordre de quelques minutes d'arc, il peut s'avérer compliqué de déterminer cette variation angulaire au niveau de ladite portion S15 de la première partie 15 de la rotule 12.

Or, la modification de l'orientation de l'axe B de l'outil 1 par rapport à la normale N à la surface 3 va générer un déplacement important au niveau de l'extrémité supérieure du fourreau F15, i.e. l'extrémité située à l'opposé de l'extrémité E15 de la première partie 15 de la rotule 12, par un effet de bras de levier, lequel est plus facilement mesurable pour connaître l'orientation de la première partie 15 par rapport à la deuxième partie 16 de la rotule 12.

Comme visible sur l'exemple de réalisation de la figure 4, afin de faciliter cette mesure, il peut être avantageux de maximiser ce déplacement en employant un fourreau F15 avec une longueur importante, par exemple telle que son extrémité supérieure se trouve à proximité de la partie de fixation 13 du corps de support 11.

Les moyens pour mesurer l'orientation de l'axe B de l'outil 1 par rapport à la surface 3 peuvent ainsi être avantageusement positionnés sur le corps de support 11, sur la portion de réception 14 de la partie opérationnelle de l'outil 17, et notamment à proximité de la partie de fixation 13 du corps de support 11, ce qui permet de ne pas encombrer la zone à proximité de l'extrémité E15 de la première partie 15 de la rotule 12.

Dans un tel mode de réalisation, la paroi intérieure P14, autorisant le passage, peut correspondre, au moins en partie, à la paroi intérieure du fourreau F15.

Comme visible sur les exemples de réalisation des figures 2 à 4, la deuxième partie 16 de la rotule 12 peut comprendre une portion S16 formant sensiblement une portion de sphère concave, et notamment une demi-sphère, de dimensions correspondant à la portion S15 de la première partie 15 de la rotule 12, afin de constituer un siège pour ladite portion S15 de la première partie 15 de la rotule 12, afin de permettre la rotation de la première partie 15 par rapport à la deuxième partie 16 autour des trois axes (Ox), (Oy) et (Oz) définis précédemment.

Des moyens de réduction du frottement, comme par exemple des billes, peuvent être prévus afin de faciliter la rotation de la première partie 15 par rapport à la deuxième partie 16. Egalement, des moyens de fixation peuvent être prévus afin d'assurer l'immobilisation en translation, et notamment selon l'axe (Oz) de la première partie 15 par rapport à la deuxième partie 16.

Selon un mode de réalisation, ladite rotule 12 est configurée de sorte que le centre de rotation O de la rotule 12 soit disposé au niveau de la surface 3, lorsque l'extrémité E15 de la première partie de la rotule 15 est appuyée contre ladite surface 3.

Cette disposition est particulièrement avantageuse car l'effort exercé par l'outil 1 est appliqué au niveau du centre de rotation O de la rotule 12.

Ainsi, la modification de l'orientation de l'axe B de l'outil 1 par rapport à la normale N à la surface 3 va correspondre à la modification de l'orientation de la première partie 15 par rapport à la deuxième partie 16 de la rotule 12, et notamment dans le cas où c'est celle-ci qui est mesurée, ce qui simplifie le calcul de l'orientation de l'axe B de l'outil 1 par rapport à la normale N à la surface 3.

Selon un mode de réalisation, le corps de support 11 est de forme sensiblement cylindrique.

Cette disposition avantageuse de l'invention permet de réduire l'encombrement de l'outil 1, et notamment dans le cas où la partie opérationnelle d'outil 17 est de forme cylindrique, comme par exemple un outil de perçage.

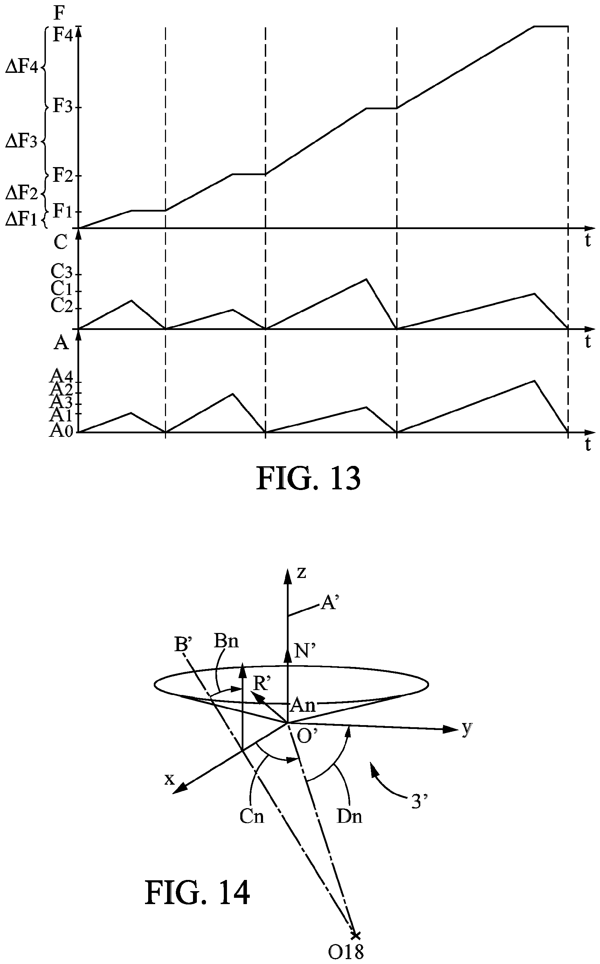

Dans la présente demande, on définit également un repère cartésien (O',x,y,z), comme représenté sur la figure 14, dans lequel le centre O' correspond à un premier centre de rotation de l'axe B' de l'outil 1' en contact avec la surface 3', par rapport à la normale N' à la surface 3'. Egalement, le plan (O'xy) correspond au plan de la surface 3', et l'axe (O'z) correspond à la normale N' à ladite surface 3', lorsque celle-ci est au repos, c'est-à-dire ne recevant aucune sollicitation extérieure.

L'invention concerne encore un procédé de mise en poussée avec un effort F' selon un axe A' d'un outil 1' à l'extrémité d'un bras articulé 2' contre une surface 3' de normale N', dans lequel l'outil 1' est apte à pivoter par rapport à la surface 3' lorsque mis en position contre ladite surface 3', selon deux centres de rotation distincts : un premier centre de rotation O' situé sur ladite surface 3 et un deuxième centre de rotation 018 écarté de ladite surface 3'.

Selon l'invention, ledit procédé comprend les étapes :
(a') mise en position de l'outil 1' contre ladite surface 3', de sorte à faire coïncider l'axe B' de l'outil avec ledit axe A' de l'effort F', l'axe A' étant orienté selon un couple d'angles A0, B0 par rapport à la normale N' et la droite (O'O18) étant orienté selon un couple d'angle C0, D0 par rapport à l'axe B' de l'outil 1',
(b') application à l'outil 1' d'un effort croissant jusqu'à atteindre une valeur Fn', correspondant à une fraction de l'effort F', la valeur de l'effort Fn' appliqué étant contrôlée par l'intermédiaire de moyens pour mesurer l'effort de réaction R' de la surface 3' sur l'outil 1',
(c') après avoir atteint ladite valeur d'effort Fn' :
   - mesure du couple d'angles (An, Bn) de l'inclinaison de la normale N' de la surface 3' par rapport à l'axe B' de l'outil 1', et
   - mesure du couple d'angles (Cn, Dn) de l'inclinaison de la droite (O'O18) par rapport à l'axe B' de l'outil 1',
(d') réorientation de l'outil 1' par rapport à la surface 3' selon deux rotations combinées autour de chacun des deux centres de rotation (O', O18) de telle sorte que :
   - l'axe B' de l'outil 1' retrouve ladite orientation selon ledit couple d'angles (A0, B0) par rapport à la normale N' à la surface 3',
   - le couple d'angles (Cn, Dn) prenne la valeur (0°, 0°), de sorte à assurer l'alignement de la droite (O'O18) avec l'axe B' de l'outil1'.

Selon l'invention, on procède par itération, par répétition des étapes (b') à (d'), en augmentant progressivement l'effort Fn' à chaque itération, et jusqu'à atteindre la valeur d'effort F', l'incrément d'augmentation ΔFn' entre deux paliers Fn' successifs correspondant à la différence entre la valeur Fn' d'une itération et la valeur Fn'-1 de l'itération précédente, ledit incrément étant inférieur à une valeur déterminée, de sorte à empêcher le glissement de l'outil 1' sur la surface 3' tout au long du procédé, depuis la mise en position de l'outil 1' sur la surface 3' au cours de l'étape (a') et jusqu'à l'obtention de l'effort F' souhaité à l'issue de l'étape (d') de la dernière itération du procédé.

Ainsi, avec le procédé selon l'invention, à chaque itération, un effort de précontrainte de valeur Fn'-1, orienté selon l'axe A' est appliqué à l'outil 1', lequel va stabiliser la position de l'outil 1' contre la surface 3' et permettre l'application d'un incrément d'augmentation ΔFn' de valeur limitée et jusqu'à parvenir à ladite valeur Fn' définie, telle que l'effort de réaction R' résultant appliqué par la surface 3' sur l'outil 1' demeure dans le cône de frottement CF' de l'outil 1' sur la surface 3', ne générant pas un glissement de l'outil 1' sur la surface 3'.

Ainsi, grâce au procédé selon l'invention, on empêche le glissement de l'outil 1', sur la surface 3', et notamment de la pointe de la partie opérationnelle d'outil 17' lors de sa mise en oeuvre pour effectuer une opération de fabrication sur la surface 3'. On peut ainsi être certain que l'outil 1' conservera la position souhaitée à l'issue de l'opération de fabrication réalisée par ledit outil 1', celui-ci, et notamment de la pointe de la partie opérationnelle d'outil 17', n'ayant pas dévié de sa position initiale une fois la valeur F' de l'effort de mise en poussée nécessaire à ladite opération atteinte.

Avantageusement, la valeur de l'effort F' de mise en poussée de l'outil 1' contre la surface 3', est déterminée de sorte que celle-ci soit supérieure à la valeur de l'effort appliqué par la partie opérationnelle 17' de l'outil 1' sur la surface 3' lors de ladite opération, afin de s'assurer que l'outil 1' ne glisse pas sur la surface 3' lors de la mise en oeuvre de cette opération.

On s'assure avec le procédé selon l'invention que l'effort de poussée F' est appliqué selon l'axe A' souhaitée, l'orientation de l'axe B' de l'outil 1' étant corrigée en continue, tout au long du procédé.

En effet, l'effort de poussée Fn', appliqué à l'outil 1' selon son axe B', met en appui l'outil 1' contre la surface 3', laquelle exerce ainsi un effort de réaction R' sur l'outil 1', également orienté selon l'axe B' de l'outil, avec une composante selon la normale N' à la surface 3' et une composante selon une direction orthogonale à ladite normale N' à la surface 3', dépendant du coefficient de frottement entre l'outil 1' et la surface 3. La valeur de cet effort de réaction R', correspondant à la valeur de l'effort Fn', est mesurée en permanence par les moyens pour mesurer l'effort de réaction R' de la surface 3' sur l'outil 1'.

Cet effort Fn' appliqué sur la surface 3' va également entraîner la déformation locale de la surface 3', notamment en flexion, ce qui va modifier l'orientation de la normale N' à la surface 3' par rapport au bras articulé 2' recevant ledit outil 1', et donc faire dévier l'axe B' de l'outil 1' de la direction A' souhaitée, et fixée par le mouvement du bras articulé 2'.

De plus l'effort de réaction R' est transmis par l'outil 1' au bras articulé 2', et notamment aux articulations du bras articulé 2', les entraînant ainsi en rotation, et donc modifiant également l'orientation de l'axe B' par rapport à la direction A' souhaitée, et autour de différents centres de rotation.

Selon les constations de l'inventeur, en autorisant l'axe B' de l'outil 1' à pivoter par rapport à la normale N' à la surface 3' selon une rotation combinée autour de deux centres de rotation O' et 018, distincts, et en annulant ensuite ce pivotement de l'axe B' de l'outil 1' par rapport à la normale N' à la surface 3', il est possible de compenser tous les déplacement non souhaités du bras articulé 2' autour de l'ensemble de ses articulations, de sorte à faire coïncider à la fin de chaque itération l'axe B' de l'outil 1' avec l'axe A' de l'effort F' souhaité.

Egalement, chaque valeur d'effort Fn', et donc l'incrément d'augmentation ΔFn', à chaque itération, est avantageusement fixée de telle sorte que l'effort de réaction R' se trouve orienté de telle façon qu'il se retrouve à l'intérieur du cône de frottement CF' de l'outil 1' sur la surface 3, comme représenté sur la figure 14.

Chacune de ces valeurs Fn' et chacun des incréments d'augmentation ΔFn' peuvent par exemple être déterminés de façon expérimentale.

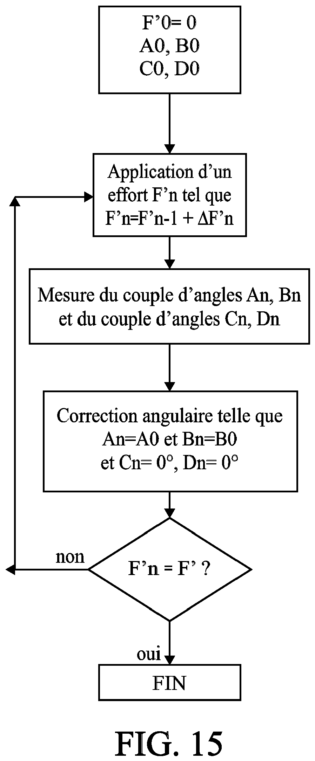

Un exemple de réalisation du procédé selon l'invention est représenté sous la forme d'un logigramme à la figure 15.

Les conditions initiales correspondent à une orientation (A0, B0) de la normale N' à la surface 3' par rapport à l'axe B' de l'outil 1', à une orientation (C0, D0) de la droite (O'O18) par rapport à l'axe B' de l'outil 1', et à une application de l'outil 1'contre la surface 3' avec son axe B' selon un axe A', et avec un effort F0'.

L'orientation (C0, D0) de la droite (O'O18) par rapport à l'axe B' de l'outil 1' peut avantageusement valoir sensiblement (0°, 0°), la droite (O'O18) étant alignée avec l'axe B' de l'outil 1'.

L'effort F0' peut par exemple être nul, ou encore, de façon avantageuse légèrement supérieur à 0 N, de sorte à assurer la stabilité de l'outil 1' sur la surface 3'.

Comme expliqué ci-dessus, grâce au procédé selon l'invention, il n'y a que des mouvements de rotation à effectuer autour de chacun des premier O' et deuxième 018 centres de rotation pour compenser la perte de la position de l'axe B' de l'outil souhaité, et aucun mouvement de translation, ce qui facilite et simplifie la mise en oeuvre du procédé selon l'invention.

De ce fait, le procédé est également plus rapide à être mis en oeuvre.

Selon un mode de réalisation, l'axe A' de l'effort de poussée F' correspond à la normale N' à la surface 3', de telle sorte que ledit couple d'angles (A0, B0) correspond à la valeur (0°, 0°).

En effet, le procédé selon l'invention trouve une application particulièrement avantageuse dans le cas où l'axe A' de l'effort de poussée F' correspond à la normale N' à la surface 3'.

Néanmoins, le procédé selon l'invention peut également être appliqué dans le cas où l'axe A' de l'effort de poussée F' dévie de la normale N' à la surface 3', mais néanmoins de façon limitée, afin de ne pas entraîner le glissement de l'outil 1' sur la surface 3'.

Dans la suite de la description, pour plus de simplicité et donc de clarté, on décrira en détail le cas où l'axe A' de l'effort de poussée F' correspond à la normale N' à la surface 3', sauf précisions contraires.

Selon un mode de réalisation, l'incrément d'augmentation ΔFn' entre deux paliers Fn successifs est constant.

Ainsi, l'écart entre deux paliers Fn' successifs est constant, notamment tout au long du procédé, ce qui simplifie sa mise en oeuvre.

Selon un mode de réalisation, l'incrément d'augmentation ΔFn' entre deux paliers Fn successifs est non constant, croissant.

Ainsi, plus la valeur de l'effort Fn' se rapproche de la valeur F' souhaitée, plus l'écart entre deux paliers Fn' successifs augmente.

Grâce à cette disposition avantageuse de l'invention, le temps de mise en oeuvre du procédé selon l'invention, jusqu'à parvenir à la valeur F' de l'effort de poussée souhaité peut être réduite, notamment par rapport au mode de réalisation dans lequel l'écart entre deux paliers Fn' successifs est constant.

Selon les constatations de l'inventeur, cette disposition avantageuse de l'invention est rendue possible grâce au fait que, plus l'effort de précontrainte Fn'-1 appliqué à l'outil 1' à chaque itération est important, plus il est possible d'appliquer un incrément d'augmentation d'effort ΔFn' important à l'outil 1' avant que l'effort de réaction R' de la surface 3' sur l'outil 1' ne se trouve hors du cône de frottement CF', et donc que l'outil 1' ne glisse sur la surface 3'.

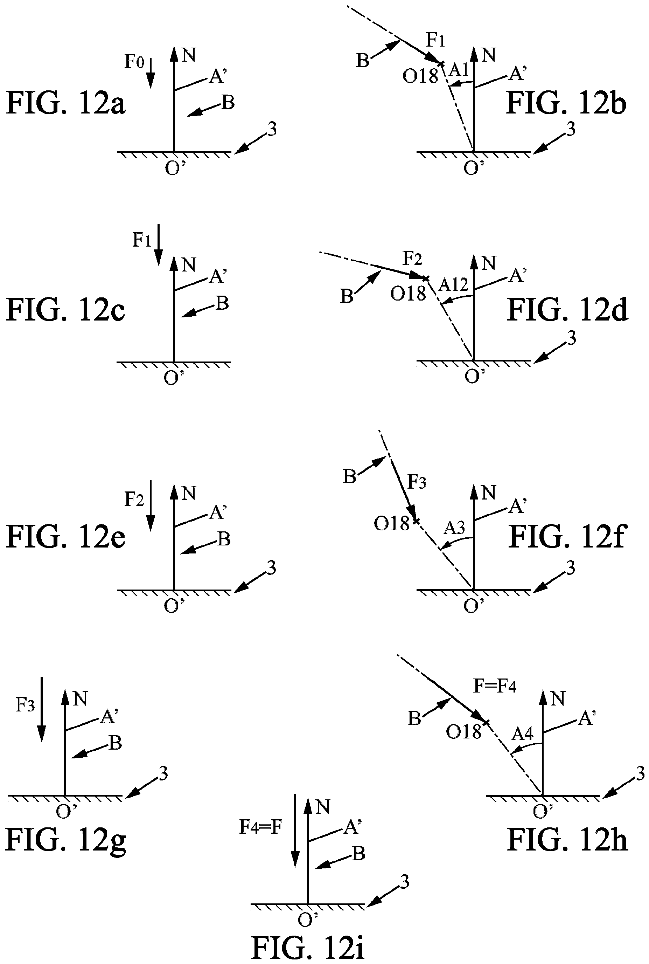

Ce mode de réalisation est par exemple représenté de façon schématique sur les figures 12a à 12i, sur lesquels on applique quatre paliers successifs d'effort Fn' croissant, tels que F1'<F2'<F3'<F4'=F', les incréments d'augmentation d'efforts ΔFn' successifs étant également croissants.

Pour des raisons de clarté, les déformations de la surface 3' ne sont pas représentées sur les différentes figures 12a à 12i.

Egalement, pour plus de clarté, on a représenté les mouvements de l'axe B' de l'outil 1' dans le plan (Oxz) tel que défini plus haut avec uniquement l'orientation de la normale N' à la surface 3'par rapport à l'axe B' de l'outil 1' autour de l'axe (O'y) selon le centre de rotation O', avec l'angle An, et l'orientation de la droite (O'O18) par rapport à l'axe B' de l'outil 1' autour de l'axe (O'y) selon le centre de rotation 018, avec l'angle Cn.

L'outil 1' se trouve en position initiale sur la figure 12a, correspondant à l'étape (a') du procédé, avec son axe B' aligné avec la normale N' à la surface 3'.

La première itération du procédé avec la première succession des étapes (b') à (d') est ensuite représentée sur les figures 12b et 12c, la figure 12b représentant l'outil 1' dans sa position à l'issue de l'étape (b'), son axe B' étant orienté selon le couple d'angles (An, Bn) autour du premier centre de rotation O' et selon le couple d'angles (Cn, Dn) autour du deuxième centre de rotation 018, tandis que la figure 12c représente l'outil 1' dans sa position à l'issue de l'étape (d').

La deuxième itération du procédé avec la deuxième succession des étapes (b') à (d') est représentée sur les figures 12d et 12e, la troisième sur les figures 12f et 12g, et la quatrième et dernière sur les figures 12h et 12i.

Les chronogrammes représentés sur la figure 13 représentent la valeur de l'effort Fn' appliqué à l'outil 1' au cours des quatre itérations du procédé décrites ci-dessus, avec les quatre paliers successifs croissants F1' à F4', ainsi que la variation de la valeur de l'angle An et de l'angle Cn. Pour plus de simplicité, la variation de la valeur de l'angle Bn et de l'angle Dn au cours du temps ne sont pas représentées.

Comme représenté sur le chronogramme du haut de la figure 13, l'effort Fn' peut être appliqué au cours de chacune des itérations de façon croissante jusqu'à atteindre la valeur Fn' souhaitée puis maintenu à cette valeur Fn' jusqu'à la fin de l'étape (d'), à l'issue de laquelle l'orientation de l'axe B' de l'outil 1' par rapport à la normale N' à la surface 3', autour du premier O' et du deuxième centre de rotation 018 est corrigée pour reprendre sa position initiale.

La variation de l'effort Fn' et de chacun des angles An, Bn, Cn et Dn au cours de chacune desdites itérations peut se faire plus ou moins rapidement, et de façon sensiblement linéaire, comme représenté sur la figure 13, ou de tout autre façon, notamment afin de gagner en précision et/ou en rapidité d'exécution.

Selon un mode de réalisation, l'outil 1' est un outil de perçage.

Alternativement, l'outil 1' peut être tout autre type d'outil employé dans le cadre de fabrication d'aéronefs, comme par exemple un outil de rivetage, de soudage, d'alésage, etc.

Selon un mode de réalisation, à la fin de l'étape (a') et au cours de chacune des étapes (b') à (d'), le deuxième centre de rotation 018 est positionné à l'opposé de l'outil 1' par rapport à la surface 3'.

Ainsi, et selon les constations de l'inventeur, une telle position du deuxième centre de rotation 018 améliorer la stabilité de l'outil 1' lors de l'application de l'effort F' par itérations au cours du procédé selon l'invention, et notamment en comparaison d'un procédé prévoyant le deuxième centre de rotation 018 situé du même côté de la surface 3' que le premier centre de rotation O', et en particulier au-dessus de celui-ci, selon la direction de la normale N' à la surface 3'.

La rotation de l'axe B' de l'outil 1' par rapport à la normale N' à la surface 3' autour du premier O' et du deuxième centre de rotation 018 se fait avec une amplitude réduite, ce qui diminue les risques de glissement de l'outil 1' sur la surface 3' et facilite la correction de l'inclinaison de l'axe B' par rapport à la normale N' à la surface 3' autour du premier O' et du deuxième centre de rotation 018, et simplifie donc le procédé selon l'invention.

L'invention concerne également un dispositif 10'comprenant un outil 1' avec :
- un corps de support 11' muni de moyens pour mesurer un effort de réaction R' d'une surface 3' sur ledit outil 1', lorsque l'outil 1' appuie contre ladite surface,
- des moyens d'appui de l'outil 1' contre ladite surface 3', configurés de sorte à réaliser l'appui de l'outil 1' sur ladite surface 3' avec une orientation variable de l'axe B' de l'outil 1' par rapport à la surface 3', selon deux centres de rotation distincts : ledit premier centre de rotation O' étant situé au niveau de ladite surface 3' et ledit deuxième centre de rotation 018 écarté de ladite surface 3',
- des premiers moyens de mesure configurés pour mesurer ladite orientation de la normale N' de la surface 3' par rapport à l'axe B' de l'outil 1', et
- des deuxièmes moyens de mesure configurés pour mesurer l'orientation de la droite (O'O18) par rapport à l'axe B' de l'outil 1',
- une partie opérationnelle d'outil 17', destinée à être mise en oeuvre pour effectuer une opération de fabrication sur ladite surface 3'.

Selon l'invention, ledit dispositif 10' comprend également un bras articulé 2' à l'extrémité duquel est fixé ledit outil 1', le bras articulé 2' étant configuré de sorte à appliquer un effort de poussée d'axe A' à l'outil 1', et des moyens de contrôle configurés pour la mise en oeuvre des étapes du procédé de mise en poussée de l'outil 1' selon l'un des modes de réalisation décrit précédemment.

L'ensemble des dispositions relatives au procédé décrit précédemment sont applicables au dispositif 10' selon l'invention.

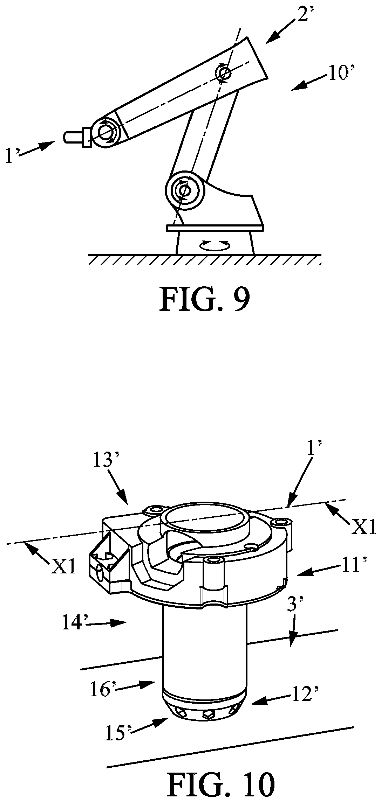

Comme visible sur l'exemple de réalisation de la figure 9, le bras articulé 2' du dispositif 10' est un bras articulé robotisé employé de façon bien connue dans l'aéronautique pour réaliser de façon automatisée différentes opérations de fabrication d'un aéronef, tel que décrit précédemment.

L'orientation et le positionnement de l'outil 1', et donc de l'axe B', ainsi que de la droite O'O18, de l'outil 1', dans l'espace (O'xyz) est réalisée grâce aux différentes articulations du bras articulé 2', des moyens de fixation rigides étant prévus entre ledit outil 1' et l'extrémité du bras articulé 2' recevant celui-ci, configurés de sorte à assurer l'immobilisation de l'outil 1' par rapport au bras articulé 2'.

La partie opérationnelle d'outil 17' est l'élément qui va réaliser en tant que tel l'opération de fabrication souhaitée sur ladite surface 3' de la pièce. La partie opérationnelle d'outil 17' peut par exemple être un foret dans le cas d'une opération de perçage, une fraise dans le cas d'une opération de fraisage, etc.

Ainsi, la partie opérationnelle de l'outil 17' peut être apte à se déplacer par rapport au corps de support 11' de l'outil 1', par exemple en étant mis en rotation autour de l'axe B' de l'outil 1' et/ou en translatant le long dudit axe B', dans le cas d'un outil de perçage. Des moyens de mise en mouvement supplémentaires (non représentés) peuvent être prévus à cet effet.

De même la mise en poussée avec l'effort Fn' de l'outil 1' contre la surface 3' peut être réalisée par l'intermédiaire du bras articulé 2' qui vient contraindre l'outil 1' contre la surface 3'.

Notamment, lors du déroulement du procédé selon l'invention, la mise en position de l'outil 1' au cours de l'étape (a'), l'application à l'outil 1' d'un effort Fn' au cours de l'étape (b') et la réorientation de l'outil 1' au cours de l'étape (d') peuvent être effectuées grâce aux mouvements du bras articulé 2', piloté par l'intermédiaire des moyens de contrôle.

Les moyens de contrôle non représentés peuvent par exemple comprendre un ou plusieurs circuits électroniques, configurés de sorte à recevoir les informations mesurées par les moyens pour mesurer un effort de réaction R' de la surface 3' sur l'outil 1', par les premiers moyens pour mesurer l'orientation de la normale N' à ladite surface 3' par rapport à l'axe B' de l'outil 1' et par les deuxièmes moyens pour mesurer l'orientation de la droite (O'O18) par rapport à l'axe B' de l'outil 1', et à transmettre des signaux de commande au bras articulé 2' de sorte à exécuter ledit procédé.

Les moyens de contrôle peuvent par exemple comprendre des moyens informatiques.

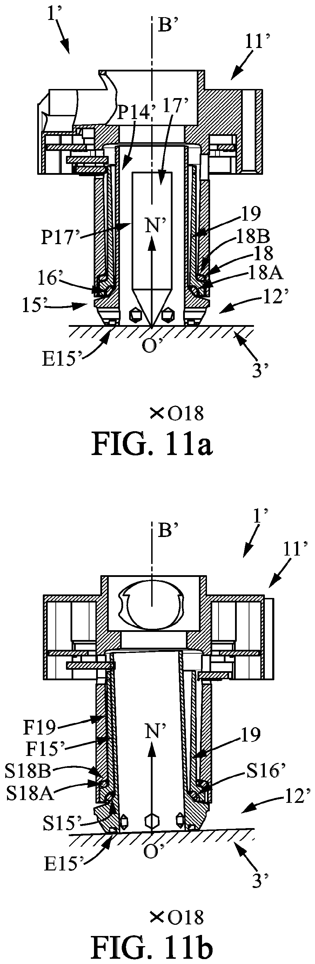

Comme visible sur les exemples de réalisation des figures 10, 11a et 11b, le corps de support 11' de l'outil 1' peut comprendre une partie de fixation 13', configurée de sorte à assurer la fixation rigide de l'outil 1' à l'extrémité du bras articulé 2', par exemple par l'intermédiaire de vis de fixation.

Le corps de support 11' peut également comprendre une portion de réception 14' de la partie opérationnelle de l'outil 17', comportant par exemple une paroi intérieure P14', configurée pour autoriser le passage de la partie opérationnelle de l'outil 17' par rapport au corps de support 11'.

Avantageusement, ladite paroi intérieure P14' est de forme correspondante à celle de la partie opérationnelle d'outil 17', par exemple cylindrique dans le cas d'une partie opérationnelle d'outil 17' de forme cylindrique.

La partie de fixation 13' peut être disposée au-dessus de la portion de réception 14' du corps de support 11' lorsque l'outil 1' est en appui sur la surface 3', dans sa position de fonctionnement pour la mise en oeuvre du procédé selon l'invention, comme visible sur les exemples de réalisation des figures 10, 11a et 11b.

Les moyens pour mesurer un effort de réaction R' de la surface 3' sur l'outil 1' peuvent par exemple comprendre un ou plusieurs capteurs d'effort (par exemple des jauges de contrainte) disposé sur le corps de support 11', et notamment sur la portion de réception 14' de la partie opérationnelle de l'outil 17'.

Alternativement ou en complément, lesdits moyens pour mesurer un effort de réaction R' de la surface 3' sur l'outil 1' peuvent être disposés sur le bras articulé 2'.

Les premiers moyens pour mesurer l'orientation de la normale N' à la surface 3' par rapport à l'axe B' de l'outil 1' et/ou les deuxièmes moyens pour mesurer l'orientation de la droite (O'O18) par rapport à l'axe B' de l'outil 1', peuvent par exemple comprendre un ou plusieurs capteurs angulaires disposés sur l'outil 1'.

Avantageusement, lesdits premiers moyens pour mesurer l'orientation de la normale N' à la surface 3' par rapport l'axe B' de l'outil 1' et/ou les deuxièmes moyens pour mesurer l'orientation de la droite (O'O18) par rapport à l'axe B' de l'outil 1' peuvent être configurés pour mesurer la modification de l'orientation des moyens d'appui 12' de l'outil 1' par rapport à la normale N' à la surface 3', laquelle correspond à l'orientation de la normale N' à la surface 3' par rapport à l'axe B' de l'outil 1' autour du premier centre de rotation O' combiné à l'orientation de la droite (O'O18) par rapport à l'axe B' de l'outil 1' autour du deuxième centre de rotation 018.

Selon un mode de réalisation, les moyens d'appui de l'outil 1' contre ladite surface 3' comprennent :
- une première rotule 12' de centre de rotation O' correspondant audit premier centre de rotation O' de l'axe B' de l'outil 1' par rapport à la surface 3', comprenant une première partie 15' présentant une extrémité E15' destinée à appuyer contre ladite surface 3' et une deuxième partie 16' solidaire d'une pièce intermédiaire 19 entre ladite première partie 15' et le corps de support 11', la première partie 15' étant articulée par rapport à la deuxième partie 16' selon au moins deux degrés de liberté, et
- une deuxième rotule 18 de centre de rotation 018 correspondant audit deuxième centre de rotation 018 de l'axe B' de l'outil 1' par rapport à la surface 3', comprenant une première partie 18A rigidement fixée à ladite pièce intermédiaire 19 et une deuxième partie 18B rigidement fixée au corps de support 11', la première partie 18A étant articulée par rapport à la deuxième partie 18B selon au moins deux degrés de liberté.

L'extrémité E15' à fonction d'appui peut être configurée de sorte à obtenir un appui circulaire, continu ou discontinu. L'appui circulaire peut par exemple être de diamètre inférieur à 5 cm, de préférence inférieur à 3 cm, et de préférence encore inférieur à 2 cm.

Selon un mode de réalisation, la première partie 15' de la première rotule 12' comprend une portion S15' formant sensiblement une portion de sphère convexe, et notamment une demi-sphère, depuis laquelle s'étend, d'un côté, l'extrémité E15' destinée à appuyer contre la surface 3', ainsi que, de l'autre côté, un premier fourreau F15', configuré pour recevoir intérieurement, au moins partiellement, la partie opérationnelle de l'outil 17', les premiers moyens pour mesurer l'orientation de la normale N' à la surface 3' par rapport à l'axe B' de l'outil 1' étant configurés de sorte à mesurer le déplacement dudit premier fourreau F15' par rapport au corps de support 11'.

Ladite deuxième partie 16' de la première rotule 12' peut alors comprendre une portion S16' formant sensiblement une portion de sphère concave, et notamment une demi-sphère, ménagée sur ladite pièce intermédiaire 19, et configurée pour coopérer avec ladite portion S15' de la première partie 15' de la première rotule 12'.

La première partie 18A de la deuxième rotule 18 peut également comprendre une portion S18A formant sensiblement une portion de sphère convexe ménagée sur ladite pièce intermédiaire 19, et notamment une demi-sphère depuis laquelle s'étend, à l'opposé de l'extrémité E15' de la première partie 15' de la première rotule 12' un fourreau F19, recevant intérieurement le premier fourreau F15' de la première partie 15' de la première rotule 12', les deuxièmes moyens pour mesurer l'orientation de l'orientation de la droite (O'O18) de l'outil 1' par rapport à l'axe B' de l'outil 1' étant configurés de sorte à mesurer le déplacement dudit deuxième fourreau F19 par rapport au corps de support 11'.

En effet, la variation angulaire des angles An et Bn de la normale N à la surface 3 par rapport à l'axe B' de l'outil 1', de même que la variation angulaire des angles Cn et Dn de la droite (O'O18) par rapport à l'axe B' de l'outil 1', étant faibles au cours de la mise en oeuvre du procédé selon l'invention, par exemple de l'ordre de quelques minutes d'arc, il peut s'avérer compliqué de déterminer cette variation angulaire au niveau de ladite portion S15' de la première partie 15' de la première rotule 12', ainsi qu'au niveau de ladite portion S18A de la première partie 18A de la deuxième rotule 18.

Or, la modification de l'orientation de la normale N' à la surface 3' par rapport à l'axe B' de l'outil 1' et la modification de l'orientation de la droite (O'O18) par rapport à l'axe B' de l'outil 1' vont générer un déplacement important, respectivement au niveau de l'extrémité supérieure du premier fourreau F15' et de l'extrémité supérieure du deuxième fourreau F19, i.e. les extrémités du premier F15' et du deuxième fourreau', F19', situées à l'opposé de l'extrémité E15' de la première partie 15' de la première rotule 12', par un effet de bras de levier, lequel est plus facilement mesurable pour connaître respectivement l'orientation de la première partie 15' par rapport à la deuxième partie 16' de la première rotule 12 et l'orientation de la première partie 18A par rapport à la deuxième partie 18B de la deuxième rotule 18.

Comme visible sur l'exemple de réalisation des figures 11a et 11b, afin de faciliter cette mesure, il peut être avantageux de maximiser ce déplacement en employant un premier fourreau F15' et/ou un deuxième fourreau F19, chacun respectivement avec une longueur importante, par exemple telle que leur extrémité supérieure respective se trouve à proximité de la partie de fixation 13' du corps de support 11'.

Afin de faciliter la mesure du déplacement du deuxième fourreau F19 par rapport au corps de support 11' sans entraver la mesure du déplacement du premier fourreau F15' par rapport au corps de support 11', le deuxième fourreau F19 peut être de longueur strictement inférieure à la longueur du premier fourreau F15'.

Les premiers moyens pour mesurer l'orientation de la normale N' à la surface 3' par rapport à l'axe B' de l'outil 1' et/ou les deuxièmes moyens pour mesurer l'orientation de la droite (O'O18) peuvent ainsi être respectivement avantageusement positionnés sur le corps de support 11', sur la portion de réception 14' de la partie opérationnelle de l'outil 17', et notamment à proximité de la partie de fixation 13' du corps de support 11', ce qui permet de ne pas encombrer la zone à proximité de l'extrémité E15' de la première partie 15' de la première rotule 12'.

Dans un tel mode de réalisation, la paroi intérieure P14', autorisant le passage de la partie opérationnelle d'outil 17', peut correspondre, au moins en partie, à la paroi intérieure du premier fourreau F15'.

Comme visible sur les exemples de réalisation des figures 11a et 11b, la deuxième partie 16' de la première rotule 12' peut comprendre une portion S16' formant sensiblement une portion de sphère concave, et notamment une demi-sphère, de dimensions correspondant à la portion S15' de la première partie 15' de la rotule 12', afin de constituer un siège pour ladite portion S15' de la première partie 15' de la première rotule 12', afin de permettre la rotation de la première partie 15' par rapport à la deuxième partie 16' autour des trois axes (O'x), (O'y) et (O'z) définis précédemment.

De même, ladite deuxième partie 18B de la deuxième rotule 18 peut comprendre une portion S18B formant sensiblement une portion de sphère concave, et notamment une demi-sphère, de dimensions correspondant à la portion S18A de la première partie 18A' de la deuxième rotule 18, afin de constituer un siège pour ladite portion S18A de la première partie 18A de la deuxième rotule 18A, afin de permettre la rotation de la première partie 18A par rapport à la deuxième partie 18B autour des trois axes (O'x), (O'y) et (O'z) définis précédemment.

Pour chacune des première 12' et deuxième rotule 18, des moyens de réduction du frottement, comme par exemple des billes, peuvent être prévus afin de faciliter la rotation de la première partie 15', respectivement 18A par rapport à la deuxième partie 16', respectivement 18B. Egalement, des moyens de fixation peuvent être prévus afin d'assurer l'immobilisation en translation, et notamment selon l'axe (O'z) de la première partie 15', respectivement 18A par rapport à la deuxième partie 16', respectivement 18B.

Selon un mode de réalisation, ladite première rotule 12' est configurée de sorte que le centre de rotation O' de la première rotule 12' soit disposé au niveau de la surface 3' lorsque l'extrémité E15' de la première partie 15' de la première rotule 12' est appuyée contre ladite surface 3'.

Cette disposition est particulièrement avantageuse car l'effort exercé par l'outil 1' est appliqué au niveau du centre de rotation O' de la première rotule 12'.

Ainsi, la modification de l'orientation la normale N' à la surface 3' par rapport à l'axe B' de l'outil 1' à va correspondre à la modification de l'orientation de la première partie 15' par rapport à la deuxième partie 16' de la rotule 12', ce qui simplifie le calcul de l'orientation de la normale N' à la surface 3' par rapport à l'axe B' de l'outil 1' autour du premier centre de rotation O'.

Egalement, ladite deuxième rotule 18' peut être configurée de sorte que le centre de rotation 018 de la deuxième rotule 18 est écarté de la surface 3' et positionné à l'opposé de l'outil 1' par rapport à la surface 3', lorsque l'extrémité E15' de la première partie 15' de la rotule 12' est appuyée contre ladite surface 3'.

Comme expliqué plus haut, une telle position du deuxième centre de rotation 018 améliorer la stabilité de l'outil 1' lors de l'application de l'effort F' par itérations au cours du procédé selon l'invention mis en oeuvre avec le dispositif selon l'invention, et notamment en comparaison avec un dispositif prévoyant le deuxième centre de rotation 018 situé du même côté de la surface 3' que le premier centre de rotation O', et en particulier au-dessus de celui-ci, selon la direction de la normale N' à la surface 3'.

La rotation de l'axe B' de l'outil 1' par rapport à la normale N' à la surface 3' autour du premier O' et du deuxième centre de rotation 018 se fait avec une amplitude réduite, ce qui diminue les risques de glissement de l'outil 1' sur la surface 3' et facilite la correction de l'inclinaison de l'axe B' par rapport à la normale N' à la surface 3' autour du premier O' et du deuxième centre de rotation 018.

Avantageusement, la distance séparant le premier centre de rotation O' de la première rotule 12' du deuxième centre de rotation 018 de la deuxième rotule 18 peut être comprise entre 10 mm et 60 mm.

Avantageusement, le corps de support 11' peut être de forme sensiblement cylindrique. Cela permet de réduire l'encombrement de l'outil 1', et notamment dans le cas où la partie opérationnelle d'outil 17' est de forme cylindrique, comme par exemple un outil de perçage.

L'invention concerne enfin un outil 1' destiné à être positionné à l'extrémité d'un bras articulé 2' pour être mis en poussée avec un effort F' selon un axe A' contre une surface 3' de normale N', dans lequel l'outil 1' est apte à pivoter par rapport à la surface 3' lorsque mis en position contre ladite surface 3', selon deux centres de rotation distincts : un premier centre de rotation O' situé au niveau de ladite surface 3' et un deuxième centre de rotation (018) écarté de ladite surface 3',
ledit outil 1' comprenant :
- un corps de support 11' muni de moyens pour mesurer un effort de réaction R' d'une surface 3' sur ledit outil 1', lorsque l'outil 1' appuie contre ladite surface 3',
- des moyens d'appui de l'outil 1' contre ladite surface 3', configurés de sorte à réaliser l'appui de l'outil 1' sur ladite surface 3' avec une orientation variable de l'axe B' de l'outil 1' par rapport à la surface 3', selon deux centres de rotation distincts : ledit premier centre de rotation O' situé sur ladite surface 3' et ledit deuxième centre de rotation 018 écarté de ladite surface 3',
- des premiers moyens de mesure configurés pour mesurer ladite orientation de la normale N' de la surface 3' par rapport à l'axe B' de l'outil 1', et
- des deuxièmes moyens de mesure configurés pour mesurer l'orientation de la droite (O'O18) par rapport à l'axe B' de l'outil 1'.

Ledit outil 1' peut notamment être adapté à la mise en oeuvre du procédé de mise en poussée selon l'invention, tel que décrit précédemment, l'ensemble des dispositions concernant le procédé décrites précédemment pouvant s'appliquer audit outil 1'.

De même, ledit outil 1' peut appartenir au dispositif 10' selon l'invention prévu pour la mise en oeuvre du procédé selon l'invention. L'ensemble des dispositions de l'outil 1' du dispositif 10' selon l'invention décrites précédemment s'appliquent à l'outil 1' selon l'invention.

Notamment, les moyens d'appui de l'outil 1' contre ladite surface 3' peuvent comprendre :
- une première rotule 12' de centre de rotation O' correspondant audit premier centre de rotation O' de l'axe B' de l'outil 1' par rapport à la surface 3', comprenant une première partie 15' présentant une extrémité E15' destinée à appuyer contre ladite surface 3' et une deuxième partie 16' solidaire d'une pièce intermédiaire 19 entre ladite première partie 15' et le corps de support 11', la première partie 15' étant articulée par rapport à la deuxième partie 16' selon au moins deux degrés de liberté, et
- une deuxième rotule 18 de centre de rotation 018 correspondant audit deuxième centre de rotation 018 de l'axe B' de l'outil 1' par rapport à la surface 3', comprenant une première partie 18A rigidement fixée à ladite pièce intermédiaire 19 et une deuxième partie 18B rigidement fixée au corps de support 11', la première partie 18A étant articulée par rapport à la deuxième partie 18B selon au moins deux degrés de liberté.

Naturellement, d'autres modes de réalisation auraient pu être envisagés par l'Homme du métier sans pour autant sortir du cadre de l'invention définie par les revendications ci-après.

### NOMENCLATURE

1, 1'. Outil
A, A'. Axe de l'effort
B, B'. Axe de l'outil
11, 11'. Corps de support
12, 12', 18. Rotule
13, 13'. Partie de fixation
14, 14'. Portion de réception de l'outil
P14, P14'. Paroi intérieure
15, 15'. Première partie de rotule
E15, E15'. Extrémité
F15, F15'. Fourreau
S15, S15'. Portion sphérique
16, 16'. Deuxième partie de rotule
S16, S16'. Portion sphérique
O. Pointe de l'outil, centre de rotation de la rotule
17, 17'. Partie opérationnelle d'outil
P17, P17'. Paroi périphérique extérieure
2, 2'. Bras articulé
3, 3'. Surface
N, N'. Normale
10, 10'. Dispositif
F, Fn, F', Fn'. Effort
R, R'. Effort de réaction
CF, CF'. Cône de frottement
Θn, βn. Angle
O'. Premier centre de rotation
018. Deuxième centre de rotation
An, Bn, Cn, Dn. Angle
19. Pièce intermédiaire
F19. Fourreau

## Revendications

1. Procédé de mise en poussée avec un effort (F) selon un axe (A) d'un outil (1) à l'extrémité d'un bras articulé (2) contre une surface (3) de normale (N), comprenant les étapes :
(a) mise en position de l'outil (1) contre ladite surface (3), de sorte à faire coïncider l'axe (B) de l'outil avec ledit axe (A) de l'effort (F), l'axe (A) étant orienté selon un couple d'angles (Θ0, β0) par rapport à la normale (N),
(b) application à l'outil (1) d'un effort croissant jusqu'à atteindre une valeur (Fn), correspondant à une fraction de l'effort (F), la valeur de l'effort (Fn) appliqué étant contrôlée par l'intermédiaire de moyens pour mesurer l'effort de réaction (R) de la surface (3) sur l'outil (1),
(c) mesure du couple d'angles (Θn, βn) de l'axe (B) de l'outil (1) par rapport à la normale (N), après avoir atteint ladite valeur d'effort (Fn),
(d) réorientation de l'outil (1) de telle sorte que son axe (B) retrouve ladite orientation selon ledit couple d'angles (Θ0, β0) par rapport à la normale (N),
procédé dans lequel on procède par itération, par répétition des étapes (b) à (d), en augmentant progressivement l'effort (Fn) à chaque itération, et jusqu'à atteindre la valeur d'effort (F), l'incrément d'augmentation (ΔFn) entre deux paliers (Fn) successifs correspondant à la différence entre la valeur (Fn) d'une itération et la valeur (Fn-1) de l'itération précédente, ledit incrément étant inférieur à une valeur déterminée, de sorte à empêcher le glissement de l'outil (1) sur la surface (3) tout au long du procédé, depuis la mise en position de l'outil (1) sur la surface (3) au cours de l'étape (a) et jusqu'à l'obtention de l'effort (F) souhaité à l'issue de l'étape (d) de la dernière itération du procédé.

2. Procédé selon la revendication 1, dans lequel l'axe (A) de l'effort de poussée (F) correspond à la normale (N) à la surface (3), de telle sorte que ledit couple d'angles corresponde à (Θ0=0°, β0=0°).

3. Procédé selon l'une des revendications 1 ou 2, dans lequel l'incrément d'augmentation ΔFn est constant.

4. Procédé selon l'une des revendications 1 à 3, dans lequel l'incrément d'augmentation ΔFn entre deux paliers (Fn) successifs est non constant, croissant.

5. Procédé selon l'une des revendications 1 à 4, dans lequel l'outil (1) est un outil de perçage.

6. Dispositif (10) comprenant un outil (1) avec :
- un corps de support (11) muni de moyens pour mesurer un effort de réaction (R) d'une surface (3) sur ledit outil (1), lorsque l'outil (1) appuie contre ladite surface,
- des moyens d'appui (12) de l'outil (1) contre ladite surface (3), configurés de sorte à réaliser l'appui de l'outil (1) sur ladite surface (3) avec une orientation variable de l'axe (B) de l'outil (1) par rapport à la normale (N) à la surface (3),
- des moyens pour mesurer ladite orientation de l'axe (B) de l'outil (1) par rapport à la normale (N) de ladite surface (3),
- une partie opérationnelle d'outil (17), destinée à être mise en oeuvre pour effectuer une opération de fabrication sur ladite surface (3),
ledit dispositif (10) comprenant également un bras articulé (2) à l'extrémité duquel est fixé ledit outil (1), le bras articulé (2) étant configuré de sorte à appliquer un effort de poussée d'axe (A) à l'outil (1),
et des moyens de contrôle configurés pour la mise en oeuvre des étapes du procédé de mise en poussée de l'outil (1) selon l'une des revendications 1 à 5.

7. Dispositif (10) selon la revendication 6, dans lequel les moyens d'appui (12) de l'outil (1) contre ladite surface (3) comprennent une rotule (12) comprenant une première partie (15) présentant une extrémité (E15) destinée à appuyer contre ladite surface (3) et une deuxième partie (16) fixée rigidement au corps de support (11), la première partie (15) étant articulée par rapport à la deuxième partie (16) selon trois degrés de liberté, avec un centre de rotation (O).

8. Dispositif (10) selon la revendication 7, dans lequel la première partie (15) de la rotule (12) comprend une portion (S 15) formant sensiblement une portion de sphère convexe, et notamment une demi-sphère, depuis laquelle s'étend, d'un côté, l'extrémité (E15) destinée à appuyer contre la surface (3), ainsi que, de l'autre côté, un fourreau (F15), configuré pour recevoir intérieurement, au moins partiellement, la partie opérationnelle de l'outil (17), les moyens pour mesurer l'orientation de l'axe (B) de l'outil (1) par rapport à la surface (3) étant configurés de sorte à mesurer le déplacement dudit fourreau (F15) par rapport au corps de support (11).

9. Dispositif (10) selon la revendication 7 ou 8, dans lequel ladite rotule (12) est configurée de sorte que le centre de rotation (O) de la rotule (12) soit disposé au niveau de la surface (3) lorsque l'extrémité (E15) de la première partie (15) de la rotule (12) est appuyée contre ladite surface (3).

10. Dispositif selon la revendication 9, dans lequel le corps de support (11) est de forme sensiblement cylindrique.

11. Procédé de mise en poussée avec un effort (F') selon un axe (A') d'un outil (1') à l'extrémité d'un bras articulé (2') contre une surface (3') de normale (N'), dans lequel l'outil (1') est apte à pivoter par rapport à la surface (3') lorsque mis en position contre ladite surface (3'), selon deux centres de rotation distincts : un premier centre de rotation (O') situé sur ladite surface (3) et un deuxième centre de rotation (018) écarté de ladite surface (3'),
ledit procédé comprenant les étapes :
(a') mise en position de l'outil (1') contre ladite surface (3'), de sorte à faire coïncider l'axe (B') de l'outil avec ledit axe (A') de l'effort (F'), l'axe (A') étant orienté selon un couple d'angles (A0, B0) par rapport à la normale (N') et la droite (O'O18) étant orienté selon un couple d'angle (C0, D0) par rapport à l'axe (B') de l'outil (1'),
(b') application à l'outil (1') d'un effort croissant jusqu'à atteindre une valeur (Fn'), correspondant à une fraction de l'effort (F'), la valeur de l'effort (Fn') appliqué étant contrôlée par l'intermédiaire de moyens pour mesurer l'effort de réaction (R') de la surface (3') sur l'outil (1'),
(c') après avoir atteint ladite valeur d'effort (Fn') :
- mesure du couple d'angles (An, Bn) de l'inclinaison de la normale (N') de la surface (3') par rapport à l'axe (B') de l'outil (1'), et
- mesure du couple d'angles (Cn, Dn) de l'inclinaison de la droite (O'O18) par rapport à l'axe (B') de l'outil (1'),
(d') réorientation de l'outil (1') par rapport à la surface (3') selon deux rotations combinées autour de chacun des deux centres de rotation (O', O18) de telle sorte que :
- l'axe (B') de l'outil (1') retrouve ladite orientation selon ledit couple d'angles (A0, B0) par rapport à la normale (N') à la surface (3'),
- le couple d'angles (Cn, Dn) prenne la valeur (0°, 0°), de sorte à assurer l'alignement de la droite (O'O18) avec l'axe (B') de l'outil (1'), et
procédé dans lequel on procède par itération, par répétition des étapes (b') à (d'), en augmentant progressivement l'effort (Fn') à chaque itération, et jusqu'à atteindre la valeur d'effort (F'), l'incrément d'augmentation (ΔFn') entre deux paliers (Fn') successifs correspondant à la différence entre la valeur (Fn') d'une itération et la valeur (Fn'-1) de l'itération précédente, ledit incrément étant inférieur à une valeur déterminée, de sorte à empêcher le glissement de l'outil (1') sur la surface (3') tout au long du procédé, depuis la mise en position de l'outil (1') sur la surface (3') au cours de l'étape (a') et jusqu'à l'obtention de l'effort (F') souhaité à l'issue de l'étape (d') de la dernière itération du procédé.

12. Procédé selon la revendication 11, dans lequel l'axe (A') de l'effort de poussée (F') correspond à la normale (N') à la surface (3'), de telle sorte que ledit couple d'angles (A0, B0) correspond à la valeur (0°, 0°).

13. Procédé selon l'une des revendications 11 ou 12, dans lequel, selon une première alternative l'incrément d'augmentation ΔFn' est constant, ou, selon une deuxième alternative, l'incrément d'augmentation ΔFn' entre deux paliers (Fn') successifs est non constant, croissant.

14. Procédé selon l'une des revendications 11 à 13, dans lequel, à la fin de l'étape (a') et au cours de chacune des étapes (b') à (d'), le deuxième centre de rotation (018) est positionné à l'opposé de l'outil (1') par rapport à la surface (3').

15. Dispositif (10') comprenant un outil (1') avec :
- un corps de support (11') muni de moyens pour mesurer un effort de réaction (R') d'une surface (3') sur ledit outil (1'), lorsque l'outil (1') appuie contre ladite surface,
- des moyens d'appui de l'outil (1') contre ladite surface (3'), configurés de sorte à réaliser l'appui de l'outil (1') sur ladite surface (3') avec une orientation variable de l'axe (B') de l'outil (1') par rapport à la surface (3'), selon deux centres de rotation distincts : ledit premier centre de rotation (O') étant situé au niveau de ladite surface (3') et ledit deuxième centre de rotation (018) écarté de ladite surface (3'),
- des premiers moyens de mesure configurés pour mesurer ladite orientation de la normale (N') de la surface (3') par rapport à l'axe (B') de l'outil (1'), et
- des deuxièmes moyens de mesure configurés pour mesurer l'orientation de la droite (O'O18) par rapport à l'axe (B') de l'outil (1'),
- une partie opérationnelle d'outil (17'), destinée à être mise en oeuvre pour effectuer une opération de fabrication sur ladite surface (3'),
ledit dispositif (10') comprenant également un bras articulé (2') à l'extrémité duquel est fixé ledit outil (1'), le bras articulé (2') étant configuré de sorte à appliquer un effort de poussée d'axe (A') à l'outil (1'),
et des moyens de contrôle configurés pour la mise en oeuvre des étapes du procédé de mise en poussée de l'outil (1') selon l'une des revendications 11 à 14.

16. Dispositif (10') selon la revendication 15, dans lequel les moyens d'appui de l'outil (1') contre ladite surface (3') comprennent :
- une première rotule (12') de centre de rotation (O') correspondant audit premier centre de rotation (O') de l'axe (B') de l'outil (1') par rapport à la surface (3'), comprenant une première partie (15') présentant une extrémité (E15') destinée à appuyer contre ladite surface (3') et une deuxième partie (16') solidaire d'une pièce intermédiaire (19) entre ladite première partie (15') et le corps de support (11'), la première partie (15') étant articulée par rapport à la deuxième partie (16') selon au moins deux degrés de liberté, et
- une deuxième rotule (18) de centre de rotation (018) correspondant audit deuxième centre de rotation (018) de l'axe (B') de l'outil (1') par rapport à la surface (3'), comprenant une première partie (18A) rigidement fixée à ladite pièce intermédiaire (19) et une deuxième partie (18B) rigidement fixée au corps de support (11'), la première partie (18A) étant articulée par rapport à la deuxième partie (18B) selon au moins deux degrés de liberté.

17. Dispositif (10') selon la revendication 16, dans lequel la première partie (15') de la première rotule (12') comprend une portion (S15') formant sensiblement une portion de sphère convexe, et notamment une demi-sphère, depuis laquelle s'étend, d'un côté, l'extrémité (E15') destinée à appuyer contre la surface (3'), ainsi que, de l'autre côté, un premier fourreau (F15'), configuré pour recevoir intérieurement, au moins partiellement, la partie opérationnelle de l'outil (17'), les premiers moyens pour mesurer l'orientation de la normale (N') à la surface (3') par rapport à l'axe (B') de l'outil (1') étant configurés de sorte à mesurer le déplacement dudit premier fourreau (F15') par rapport au corps de support (11'),
dans lequel ladite deuxième partie (16') de la première rotule (12') comprend une portion (S16') formant sensiblement une portion de sphère concave, et notamment une demi-sphère, ménagée sur ladite pièce intermédiaire (19), et configurée pour coopérer avec ladite portion (S 15') de la première partie (15') de la première rotule (12'),
dans lequel la première partie (18A) de la deuxième rotule (18) comprend une portion (S18A) formant sensiblement une portion de sphère convexe ménagée sur ladite pièce intermédiaire (19), et notamment une demi-sphère depuis laquelle s'étend, à l'opposé de l'extrémité (E15') de la première partie (15') de la première rotule (12') un fourreau (F19), recevant intérieurement le premier fourreau (F15') de la première partie (15') de la première rotule (12'), les deuxièmes moyens pour mesurer l'orientation de l'orientation de la droite (O'O18) de l'outil (1') par rapport à l'axe (B') de l'outil (1') étant configurés de sorte à mesurer le déplacement dudit deuxième fourreau (F19) par rapport au corps de support (11').

18. Dispositif (10) selon la revendication 16 ou 17, dans lequel ladite première rotule (12') est configurée de sorte que le premier centre de rotation (O') de la première rotule (12') soit disposé au niveau de la surface (3') lorsque l'extrémité (E15') de la première partie (15') de la première rotule (12') est appuyée contre ladite surface (3'),
et dans lequel ladite deuxième rotule (18') est configurée de sorte que le deuxième centre de rotation (018) de la deuxième rotule (18) est écarté de la surface (3') et positionné à l'opposé de l'outil (1') par rapport à la surface (3'), lorsque l'extrémité (E15') de la première partie (15') de la rotule (12') est appuyée contre ladite surface (3').

19. Outil (1') destiné à être positionné à l'extrémité d'un bras articulé (2') pour être mis en poussée avec un effort (F') selon un axe (A') contre une surface (3') de normale (N'), dans lequel l'outil (1') est apte à pivoter par rapport à la surface (3') lorsque mis en position contre ladite surface (3'), selon deux centres de rotation distincts : un premier centre de rotation (O') situé sur ladite surface (3') et un deuxième centre de rotation (018) écarté de ladite surface (3'),
ledit outil (1') comprenant :
- un corps de support (11') muni de moyens pour mesurer un effort de réaction (R') d'une surface (3') sur ledit outil (1'), lorsque l'outil (1') appuie contre ladite surface (3'),
- des moyens d'appui de l'outil (1') contre ladite surface (3'), configurés de sorte à réaliser l'appui de l'outil (1') sur ladite surface (3') avec une orientation variable de l'axe (B') de l'outil (1') par rapport à la surface (3'), selon deux centres de rotation distincts : ledit premier centre de rotation (O') situé sur ladite surface (3') et ledit deuxième centre de rotation (018) écarté de ladite surface (3'),
- des premiers moyens de mesure configurés pour mesurer ladite orientation de la normale (N') de la surface (3') par rapport à l'axe (B') de l'outil (1'), et
- des deuxièmes moyens de mesure configurés pour mesurer l'orientation de la droite (O'O18) par rapport à l'axe (B') de l'outil (1'),
dans lequel les moyens d'appui de l'outil (1') contre ladite surface (3') comprennent :
- une première rotule (12') de centre de rotation (O') correspondant audit premier centre de rotation (O') de l'axe (B') de l'outil (1') par rapport à la surface (3'), comprenant une première partie (15') présentant une extrémité (E15') destinée à appuyer contre ladite surface (3') et une deuxième partie (16') solidaire d'une pièce intermédiaire (19) entre ladite première partie (15') et le corps de support (11'), la première partie (15') étant articulée par rapport à la deuxième partie (16') selon au moins deux degrés de liberté, et
- une deuxième rotule (18) de centre de rotation (018) correspondant audit deuxième centre de rotation (018) de l'axe (B') de l'outil (1') par rapport à la surface (3'), comprenant une première partie (18A) rigidement fixée à ladite pièce intermédiaire (19) et une deuxième partie (18B) rigidement fixée au corps de support (11'), la première partie (18A) étant articulée par rapport à la deuxième partie (18B) selon au moins deux degrés de liberté.

## Patentansprüche

1. Verfahren zum Schieben eines Werkzeugs (1) am Ende eines Gelenkarms (2) mit einer Kraft (F) entlang einer Achse (A) gegen eine Fläche (3) mit einer Normalen (N), umfassend die folgenden Schritte:
(a) Positionieren des Werkzeugs (1) an der Fläche (3), so dass die Achse (B) des Werkzeugs mit der Achse (A) der Kraft (F) zusammenfällt, wobei die Achse (A) entlang eines Winkelpaars (00, β0) in Bezug zur Normalen (N) ausgerichtet ist,
(b) Anwenden einer zunehmenden Kraft am Werkzeug (1), bis ein Wert (Fn) erreicht ist, der einem Bruchteil der Kraft (F) entspricht, wobei der Wert der angewandten Kraft (Fn) mit Hilfe von Mitteln zum Messen der Reaktionskraft (R) der Fläche (3) am Werkzeug (1) gesteuert wird,
(c) Messen des Winkelpaars (θn, βn) der Achse (B) des Werkzeugs (1) in Bezug zur Normalen (N), nachdem der Kraftwert (Fn) erreicht wurde,
(d) Neuausrichten des Werkzeugs (1), so dass seine Achse (B) die Ausrichtung entlang des Winkelpaars (00, β0) in Bezug zur Normalen (N) wiederfindet,
wobei bei dem Verfahren durch Iteration, durch Wiederholung der Schritte (b) bis (d) vorgegangen wird, wobei progressiv die Kraft (Fn) bei jeder Iteration erhöht wird, bis der Kraftwert (F) erreicht wird, wobei das Erhöhungsinkrement (ΔFn) zwischen zwei aufeinanderfolgenden Stufen (Fn) der Differenz zwischen dem Wert (Fn) einer Iteration und dem Wert (Fn-1) der vorhergehenden Iteration entspricht, wobei das Inkrement kleiner als ein bestimmter Wert ist, um das Gleiten des Werkzeugs (1) auf der Fläche (3) während des gesamten Verfahrens, vom Positionieren des Werkzeugs (1) auf der Fläche (3) während des Schritts (a) und bis zum Erreichen der gewünschten Kraft (F) nach dem Schritt (d) der letzten Iteration des Verfahrens, zu verhindern.

2. Verfahren nach Anspruch 1, bei dem die Achse (A) der Schubkraft (F) der Normalen (N) auf die Fläche (3) entspricht, so dass das Winkelpaar (θ0=0°, β0=0°) entspricht.

3. Verfahren nach einem der Ansprüche 1 oder 2, bei dem das Erhöhungsinkrement (ΔFn) konstant ist.

4. Verfahren nach einem der Ansprüche 1 bis 3, bei dem das Erhöhungsinkrement ΔFn zwischen zwei aufeinanderfolgenden Stufen (Fn) nicht konstant, zunehmend ist.

5. Verfahren nach einem der Ansprüche 1 bis 4, bei dem das Werkzeug (1) ein Bohrwerkzeug ist.

6. Vorrichtung (10), umfassend ein Werkzeug (1) mit:
- einem Stützgehäuse (11), das mit Mitteln zum Messen einer Reaktionskraft (R) einer Fläche (3) auf das Werkzeug (1), wenn das Werkzeug (1) auf der Fläche abgestützt ist, versehen ist,
- Mitteln (12) zum Abstützen des Werkzeugs (1) auf der Fläche (3), die eingerichtet sind, um das Abstützen des Werkzeugs (1) auf der Fläche (3) mit einer variablen Ausrichtung der Achse (B) des Werkzeugs (1) in Bezug zur Normalen (N) auf die Fläche (3) durchzuführen,
- Mitteln zum Messen der Ausrichtung der Achse (B) des Werkzeugs (1) in Bezug zur Normalen (N) der Fläche (3),
- einem operativen Werkzeugteil (17), das dazu bestimmt ist, für die Durchführung eines Herstellungsvorgangs auf der Fläche (3) eingesetzt zu werden,
wobei die Vorrichtung (10) auch einen Gelenkarm (2) umfasst, an dessen Ende das Werkzeug (1) befestigt ist, wobei der Gelenkarm (2) eingerichtet ist, um eine Schubkraft mit einer Achse (A) an das Werkzeug (1) anzulegen,
und Steuermitteln, die für den Einsatz der Schritte des Verfahrens zum Schieben des Werkzeugs (1) nach einem der Ansprüche 1 bis 5 eingerichtet sind.

7. Vorrichtung (10) nach Anspruch 6, bei der die Mittel (12) zum Abstützen des Werkzeugs (1) auf der Fläche (3) ein Drehgelenk (12) aufweisen, umfassend einen ersten Teil (15), der ein Ende (E15) aufweist, das dazu bestimmt ist, an der Fläche (3) abgestützt zu sein, und einen zweiten Teil (16), der starr am Stützgehäuse (11) befestigt ist, wobei der erste Teil (15) in Bezug zum zweiten Teil (16) nach drei Freiheitsgraden mit einem Drehmittelpunkt (O) gelenkig angeordnet ist.

8. Vorrichtung (10) nach Anspruch 7, bei der der erste Teil (15) des Drehgelenks (12) einen Abschnitt (S15) umfasst, der im Wesentlichen einen konvexen Kugelabschnitt und insbesondere eine Halbkugel bildet, von der aus sich einerseits das Ende (E15), das dazu bestimmt ist, an der Fläche (3) abgestützt zu sein, sowie andererseits eine Hülse (F15) erstreckt, die eingerichtet ist, um innen zumindest teilweise das operative Teil des Werkzeugs (17) aufzunehmen, wobei die Mittel zum Messen der Ausrichtung der Achse (B) des Werkzeugs (1) in Bezug zur Fläche (3) eingerichtet sind, um die Verlagerung der Hülse (F15) in Bezug zum Stützgehäuse (11) zu messen.

9. Vorrichtung (10) nach Anspruch 7 oder 8, bei der das Drehgelenk (12) derart eingerichtet ist, dass der Drehmittelpunkt (O) des Drehgelenks (12) im Bereich der Fläche (3) angeordnet ist, wenn das Ende (E15) des ersten Teils (15) des Drehgelenks (12) an der Fläche (3) abgestützt ist.

10. Vorrichtung nach Anspruch 9, bei der das Stützgehäuse (11) im Wesentlichen zylindrische Form hat.

11. Verfahren zum Schieben eines Werkzeugs (1') am Ende eines Gelenkarms (2') mit einer Kraft (F') entlang einer Achse (A') gegen eine Fläche (3') mit einer Normalen (N'), bei dem das Werkzeug (1') geeignet ist, in Bezug zur Fläche (3'), wenn es an der Fläche (3') positioniert wird, nach zwei unterschiedlichen Drehmittelpunkten zu schwenken: einem ersten Drehmittelpunkt (O'), der sich auf der Fläche (3) befindet, und einem zweiten Drehmittelpunkt (018), der von der Fläche (3') entfernt ist,
wobei das Verfahren die folgenden Schritte umfasst:
(a') Positionieren des Werkzeugs (1') an der Fläche (3'), so dass die Achse (B') des Werkzeugs mit der Achse (A') der Kraft (F') zusammenfällt, wobei die Achse (A') entlang eines Winkelpaars (A0, B0) in Bezug zur Normalen (N') ausgerichtet ist, und wobei die Gerade (O'O18) entlang eines Winkelpaars (C0, D0) in Bezug zur Achse (B') des Werkzeugs (1`) ausgerichtet ist,
(b') Anwenden einer zunehmenden Kraft am Werkzeug (1'), bis ein Wert (Fn') erreicht ist, der einem Bruchteil der Kraft (F') entspricht, wobei der Wert der angewandten Kraft (Fn') mit Hilfe von Mitteln zum Messen der Reaktionskraft (R') der Fläche (3') am Werkzeug (1') gesteuert wird,
(c') nachdem der Kraftwert (Fn') erreicht wurde:
- Messen des Winkelpaars (An, Bn) der Neigung der Normalen (N') der Fläche (3') in Bezug zur Achse (B') des Werkzeugs (1'), und
- Messen des Winkelpaars (Cn, Dn) der Neigung der Geraden (O'O18) in Bezug zur Achse (B') des Werkzeugs (1'),
(d') Neuausrichten des Werkzeugs (1') in Bezug zur Fläche (3') nach zwei kombinierten Drehungen um jeden der zwei Drehmittelpunkte (0', 018), so dass:
- die Achse (B') des Werkzeugs (1') die Ausrichtung entlang des Winkelpaars (A0, B0) in Bezug zur Normalen (N') auf die Fläche (3') wiederfindet,
- das Winkelpaar (Cn, Dn) den Wert (0°, 0°) annimmt, um die Ausrichtung der Geraden (O'O18) mit der Achse (B') des Werkzeugs (1') zu gewährleisten, und
wobei bei dem Verfahren durch Iteration, durch Wiederholung der Schritte (b') bis (d') vorgegangen wird, wobei progressiv die Kraft (Fn') bei jeder Iteration erhöht wird, bis der Kraftwert (F') erreicht ist, wobei das Erhöhungsinkrement (ΔFn') zwischen zwei aufeinanderfolgenden Stufen (Fn') der Differenz zwischen dem Wert (Fn') einer Iteration und dem Wert (Fn'-1) der vorhergehenden Iteration entspricht, wobei das Inkrement kleiner als ein bestimmter Wert ist, um das Gleiten des Werkzeugs (1') auf der Fläche (3') während des gesamten Verfahrens, vom Positionieren des Werkzeugs (1') auf der Fläche (3') während des Schritts (a') und bis zum Erreichen der gewünschten Kraft (F') nach dem Schritt (d') der letzten Iteration des Verfahrens, zu verhindern.

12. Verfahren nach Anspruch 11, bei dem die Achse (A') der Schubkraft (F') der Normalen (N') auf die Fläche (3') entspricht, so dass das Winkelpaar (A0, B0) dem Wert (0°, 0°) entspricht.

13. Verfahren nach einem der Ansprüche 11 oder 12, bei dem nach einer ersten Alternative das Erhöhungsinkrement ΔFn' konstant ist, oder nach einer zweiten Alternative das Erhöhungsinkrement ΔFn' zwischen zwei aufeinanderfolgenden Stufen (Fn') nicht konstant, zunehmend ist.

14. Verfahren nach einem der Ansprüche 11 bis 13, bei dem nach dem Schritt (a') und während jedes der Schritte (b') bis (d') der zweite Drehmittelpunkt (018) gegenüber dem Werkzeug (1') in Bezug zur Fläche (3') positioniert wird.

15. Vorrichtung (10'), umfassend ein Werkzeug (1') mit:
- einem Stützgehäuse (11'), das mit Mitteln zum Messen einer Reaktionskraft (R') einer Fläche (3') auf dem Werkzeug (1'), wenn das Werkzeug (1') auf der Fläche abgestützt ist, versehen ist,
- Mitteln zum Abstützen des Werkzeugs (1') auf der Fläche (3'), die eingerichtet sind, um das Abstützen des Werkzeugs (1') auf der Fläche (3') mit einer variablen Ausrichtung der Achse (B') des Werkzeugs (1') in Bezug zur Fläche (3') nach zwei unterschiedlichen Drehmittelpunkten durchzuführen: wobei sich der erste Drehmittelpunkt (O') im Bereich der Fläche (3') befindet, und der zweite Drehmittelpunkt (018) von der Fläche (3') entfernt ist,
- ersten Messhilfsmitteln, die zum Messen der Ausrichtung der Normalen (N') der Fläche (3') in Bezug zur Achse (B') des Werkzeugs (1') eingerichtet sind.
- zweiten Messhilfsmitteln, die zum Messen der Ausrichtung der Geraden (O'O18) in Bezug zur Achse (B') des Werkzeugs (1') eingerichtet sind,
- einem operativen Werkzeugteil (17'), das dazu bestimmt ist, für die Durchführung eines Herstellungsvorgangs auf der Fläche (3') eingesetzt zu werden,
wobei die Vorrichtung (10') auch einen Gelenkarm (2') umfasst, an dessen Ende das Werkzeug (1') befestigt ist, wobei der Gelenkarm (2') eingerichtet ist, um eine Schubkraft mit einer Achse (A') an das Werkzeug (1') anzulegen,
und Steuermitteln, die für den Einsatz der Schritte des Verfahrens zum Schieben des Werkzeugs (1') nach einem der Ansprüche 11 bis 14 eingerichtet sind.

16. Vorrichtung (10') nach Anspruch 15, bei der die Mittel zum Abstützen des Werkzeugs (1') auf der Fläche (3') umfassen:
- ein erstes Drehgelenk (12') mit einem Drehmittelpunkt (O'), der dem ersten Drehmittelpunkt (O') der Achse (B') des Werkzeugs (1') in Bezug zur Fläche (3') entspricht, umfassend einen ersten Teil (15'), der ein Ende (E15') aufweist, das dazu bestimmt ist, an der Fläche (3') abgestützt zu sein, und einen zweiten Teil (16`), der mit einem Zwischenstück (19) zwischen dem ersten Teil (15') und dem Stützgehäuse (11') verbunden ist, wobei der erste Teil (15') in Bezug zum zweiten Teil (16') nach mindestens zwei Freiheitsgraden gelenkig angeordnet ist, und
- ein zweites Drehgelenk (18) mit einem Drehmittelpunkt (018), der dem zweiten Drehmittelpunkt (018) der Achse (B') des Werkzeugs (1') in Bezug zur Fläche (3') entspricht, umfassend einen ersten Teil (18A), der starr am Zwischenstück (19) befestigt ist, und einen zweiten Teil (18B), der starr am Stützgehäuse (11') befestigt ist, wobei der erste Teil (18A) in Bezug zum zweiten Teil (18B) nach mindestens zwei Freiheitsgraden gelenkig angeordnet ist.

17. Vorrichtung (10') nach Anspruch 16, bei der der erste Teil (15') des ersten Drehgelenks (12') einen Abschnitt (S15') umfasst, der im Wesentlichen einen konvexen Kugelabschnitt und insbesondere eine Halbkugel bildet, von der aus sich einerseits das Ende (E15'), das dazu bestimmt ist, an der Fläche (3') abgestützt zu sein, sowie andererseits eine Hülse (F15') erstreckt, die eingerichtet ist, um innen zumindest teilweise das operative Teil des Werkzeugs (17') aufzunehmen, wobei die ersten Mittel zum Messen der Ausrichtung der Normalen (N') auf die Fläche (3') in Bezug zur Achse (B') des Werkzeugs (1') eingerichtet sind, um die Verlagerung der ersten Hülse (F15') in Bezug zum Stützgehäuse (11') zu messen,
wobei der zweite Teil (16') des ersten Drehgelenks (12') einen Abschnitt (S16') umfasst, der im Wesentlichen einen konkaven Kugelabschnitt insbesondere eine Halbkugel bildet, die auf dem Zwischenstück (19) angeordnet und eingerichtet ist, um mit dem Abschnitt (S15') des ersten Teils (15') des ersten Drehgelenks (12') zusammenzuwirken,
wobei der erste Teil (18A) des zweiten Drehgelenks (18) einen Abschnitt (S18A) umfasst, der im Wesentlichen einen konvexen Kugelabschnitt bildet, der auf dem Zwischenstück (19) angeordnet ist, und insbesondere eine Halbkugel, von der aus sich gegenüber dem Ende (E15') des ersten Teils (15') des ersten Drehgelenks (12') eine Hülse (F19) erstreckt, die innen die erste Hülse (F15') des ersten Teils (15') des ersten Drehgelenks (12') aufnimmt, wobei die zweiten Mittel zum Messen der Ausrichtung der Geraden (O'O18) des Werkzeugs (1') in Bezug zur Achse (B') des Werkzeugs (1') eingerichtet sind, um die Verlagerung der zweiten Hülse (F19) in Bezug zum Stützgehäuse (11`) zu messen.

18. Vorrichtung (10) nach Anspruch 16 oder 17, bei der das erste Drehgelenk (12') derart eingerichtet ist, dass der erste Drehmittelpunkt (O') des ersten Drehgelenks (12') im Bereich der Fläche (3') angeordnet ist, wenn das Ende (E15') des ersten Teils (15') des ersten Drehgelenks (12') an der Fläche (3') abgestützt ist,
und bei der das zweite Drehgelenk (18') derart eingerichtet ist, dass der zweite Drehmittelpunkt (018) des zweiten Drehgelenks (18) von der Fläche (3') entfernt und gegenüber dem Werkzeug (1') in Bezug zur Fläche (3') angeordnet ist, wenn das Ende (E15') des ersten Teils (15') des ersten Drehgelenks (12') an der Fläche (3') abgestützt ist.

19. Werkzeug (1'), das dazu bestimmt ist, am Ende eines Gelenkarms (2') positioniert zu sein, um mit einer Kraft (F') entlang einer Achse (A') gegen eine Fläche (3') mit einer Normalen (N') geschoben zu werden, wobei das Werkzeug (1') geeignet ist, in Bezug zur Fläche (3'), wenn es an der Fläche (3') positioniert wird, nach zwei unterschiedlichen Drehmittelpunkten zu schwenken: einem ersten Drehmittelpunkt (O'), der sich auf der Fläche (3') befindet, und einem zweiten Drehmittelpunkt (018), der von der Fläche (3') entfernt ist,
wobei das Werkzeug (1') umfasst:
- ein Stützgehäuse (11`), das mit Mitteln zum Messen einer Reaktionskraft (R') einer Fläche (3') auf das Werkzeug (1'), wenn das Werkzeug (1') an der Fläche (3') abgestützt ist, versehen ist,
- Mittel zum Abstützen des Werkzeugs (1') auf der Fläche (3'), die eingerichtet sind, um das Abstützen des Werkzeugs (1') auf der Fläche (3') mit einer variablen Ausrichtung der Achse (B') des Werkzeugs (1') in Bezug zur Fläche (3') nach zwei unterschiedlichen Drehmittelpunkten durchzuführen: dem ersten Drehmittelpunkt (O'), der sich auf der Fläche (3') befindet, und dem zweiten Drehmittelpunkt (018), der von der Fläche (3') entfernt ist,
- erste Messhilfsmittel, die eingerichtet sind, um die Ausrichtung der Normalen (N') der Fläche (3') in Bezug zur Achse (B') des Werkzeugs (1') zu messen, und
- zweite Messhilfsmittel, die eingerichtet sind, um die Ausrichtung der Geraden (O'O18) in Bezug zur Achse (B') des Werkzeugs (1') zu messen,
wobei die Mittel zum Abstützen des Werkzeugs (1') auf der Fläche (3') umfassen:
- ein erstes Drehgelenk (12') mit einem Drehmittelpunkt (O'), der dem ersten Drehmittelpunkt (O') der Achse (B') des Werkzeugs (1') in Bezug zur Fläche (3') entspricht, umfassend einen ersten Teil (15'), der ein Ende (E15') aufweist, das dazu bestimmt ist, an der Fläche (3') abgestützt zu sein, und einen zweiten Teil (16`), der mit einem Zwischenstück (19) zwischen dem ersten Teil (15') und dem Stützgehäuse (11') verbunden ist, wobei der erste Teil (15') in Bezug zum zweiten Teil (16') nach mindestens zwei Freiheitsgraden gelenkig angeordnet ist, und
- ein zweites Drehgelenk (18) mit einem Drehmittelpunkt (018), der dem zweiten Drehmittelpunkt (018) der Achse (B') des Werkzeugs (1') in Bezug zur Fläche (3') entspricht, umfassend einen ersten Teil (18A), der starr am Zwischenstück (19) befestigt ist, und einen zweiten Teil (18B), der starr am Stützgehäuse (11') befestigt ist, wobei der erste Teil (18A) in Bezug zum zweiten Teil (18B) nach mindestens zwei Freiheitsgraden gelenkig angeordnet ist.

## Claims

1. A method for pushing, with a force (F) according to an axis (A), a tool (1) at the end of an articulated arm (2) against a surface (3) with a normal (N), comprising the steps of:
(a) positioning the tool (1) against said surface (3), so as to make the axis (B) of the tool coincide with said axis (A) of the force (F), the axis (A) being directed according to a pair of angles (Θ0, β0) with respect to the normal (N),
(b) applying an increasing force to the tool (1) until reaching a value (Fn), corresponding to a fraction of the force (F), the value of the applied force (Fn) being monitored via means for measuring the reaction force (R) of the surface (3) on the tool (1),
(c) measuring the pair of angles (Θn, βn) of the axis (B) of the tool (1) with respect to the normal (N), after having reached said force value (Fn),
(d) redirecting the tool (1) such that its axis (B) recovers said orientation according to said pair of angles (Θ0, β0) with respect to the normal (N),
the method wherein iteration is carried out to proceed, by repetition of steps (b) to (d), while progressively increasing the force (Fn) at each iteration, and until reaching the force value (F), the increase increment (ΔFn) between two successive steps (Fn) corresponding to the difference between the value (Fn) of one iteration and the value (Fn-1) of the previous iteration, said increment being smaller than a determined value, so as to prevent slipping of the tool (1) on the surface (3) throughout the method, from positioning of the tool (1) on the surface (3) during step (a) and until obtaining the desired force (F) on completion of step (d) of the last iteration of the method.

2. The method according to claim 1, wherein the axis (A) of the push force (F) corresponds to the normal (N) to the surface (3), such that said pair of angles corresponds to (Θ0=0°, β0=0°).

3. The method according to any of claims 1 or 2, wherein the increase increment ΔFn is constant.

4. The method according to any of claims 1 to 3, wherein the increase increment ΔFn between two successive steps (Fn) is non-constant, increasing.

5. The method according to any of claims 1 to 4, wherein the tool (1) is a drilling tool.

6. A device (10) comprising a tool (1) with:
- a support body (11) provided with means for measuring a reaction force (R) of a surface (3) on said tool (1), when the tool (1) bears against said surface,
- means for bearing (12) the tool (1) against said surface (3), configured so as to achieve bearing of the tool (1) on said surface (3) with a variable orientation of the axis (B) of the tool (1) with respect to the normal (N) to the surface (3),
- means for measuring said orientation of the axis (B) of the tool (1) with respect to the normal (N) of said surface (3),
- a tool operative portion (17), intended to be implemented to perform a manufacturing operation on said surface (3),
said device (10) also comprising an articulated arm (2) at the end of which said tool (1) is fastened, the articulated arm (2) being configured so as to apply a push force with an axis (A) to the tool (1),
and monitoring means configured for the implementation of the steps of the method for pushing the tool (1) according to any of claims 1 to 5.

7. The device (10) according to claim 6, wherein the means for bearing (12) the tool (1) against said surface (3) comprise a ball joint (12) comprising a first portion (15) having an end (E15) intended to bear against said surface (3) and a second portion (16) rigidly fastened to the support body (11), the first portion (15) being articulated relative to the second portion (16) according to three degrees of freedom, with a center of rotation (O).

8. The device (10) according to claim 7, wherein the first portion (15) of the ball joint (12) comprises a section (S15) substantially forming a convex sphere section, and in particular a half-sphere, from which extends, on one side, the end (E15) intended to bear against the surface (3), as well as, on the other side, a sleeve (F15), configured to internally receive, at least partially, the operative portion of the tool (17), the means for measuring the orientation of the axis (B) of the tool (1) with respect to the surface (3) being configured so as to measure the displacement of said sleeve (F15) relative to the support body (11).

9. The device (10) according to claim 7 or 8, wherein said ball joint (12) is configured so that the center of rotation (O) of the ball joint (12) is disposed at the surface (3) when the end (E15) of the first portion (15) of the ball joint (12) bears against said surface (3).

10. The device (10) according to claim 9, wherein the support body (11) has a substantially cylindrical shape.

11. A method for pushing, with a force (F') according to an axis (A'), a tool (1') at the end of an articulated arm (2') against a surface (3') with a normal (N'), wherein the tool (1') is adapted to pivot relative to the surface (3') when positioned against said surface (3'), according to two distinct centers of rotation: a first center of rotation (O') located on said surface (3) and a second center of rotation (018) away from said surface (3'),
said method comprising the steps of:
(a') positioning the tool (1') against said surface (3'), so as to make the axis (B') of the tool coincide with said axis (A') of the force (F'), the axis (A') being directed according to a pair of angles (A0, B0) with respect to the normal (N') and the line (O'O18) being directed according to a pair of angles (C0, D0) with respect to the axis (B') of the tool (1'),
(b') applying an increasing force to the tool (1') until reaching a value (Fn') corresponding to a fraction of the force (F'), the value of the applied force (Fn') being monitored via means for measuring the reaction force (R') of the surface (3') on the tool (1'),
(c') after having reached said force value (Fn'):
- measuring the pair of angles (An, Bn) of the inclination of the normal (N') of the surface (3') with respect to the axis (B') of the tool (1'), and
- measuring the pair of angles (Cn, Dn) of the inclination of the line (O'O18) with respect to the axis (B') of the tool (1'),
(d') redirecting the tool (1') with respect to the surface (3') according to two combined rotations about each of the two centers of rotation (O', 018) such that:
- the axis (B') of the tool (1') recovers said orientation according to said pair of angles (A0, B0) with respect to the normal (N') to the surface (3'),
- the pair of angles (Cn, Dn) is assigned the value (0°, 0°), so as to ensure the alignment of the line (O'O18) with the axis (B') of the tool (1'), and
the method wherein iteration is carried out to proceed, by repetition of steps (b') to (d'), while progressively increasing the force (Fn') at each iteration, and until reaching the force value (F'), the increase increment (ΔFn') between two successive steps (Fn') corresponding to the difference between the value (Fn') of one iteration and the value (Fn'-1) of the previous iteration, said increment being smaller than a determined value, so as to prevent slipping of the tool (1') on the surface (3') throughout the method, from positioning of the tool (1') on the surface (3') during step (a') and until obtaining the desired force (F') on completion of step (d') of the last iteration of the method.

12. The method according to claim 11, wherein the axis (A') of the push force (F') corresponds to the normal (N') to the surface (3'), such that said pair of angles (A0, B0) corresponds to the value (0°, 0°).

13. The method according to any of claims 11 or 12, wherein, according to a first alternative, the increase increment ΔFn' is constant, or, according to a second alternative, the increase increment ΔFn' between two successive steps (Fn') is non-constant, increasing.

14. The method according to any of claims 11 to 13, wherein, at the end of step (a') and during each of steps (b') to (d'), the second center of rotation (018) is positioned opposite to the tool (1') with respect to the surface (3').

15. A device (10') comprising a tool (1') with:
- a support body (11') provided with means for measuring a reaction force (R') of a surface (3') on said tool (1'), when the tool (1') bears against said surface,
- means for bearing the tool (1') against said surface (3'), configured so as to achieve bearing of the tool (1') on said surface (3') with a variable orientation of the axis (B') of the tool (1') with respect to the surface (3'), according to two distinct centers of rotation: said first center of rotation (O') being located at said surface (3') and said second center of rotation (018) away from said surface (3'),
- first measuring means configured to measure said orientation of the normal (N') of the surface (3') with respect to the axis (B') of the tool (1'), and
- second measuring means configured to measure the orientation of the line (O'O18) with respect to the axis (B') of the tool (1'),
- a tool operative portion (17'), intended to be implemented to perform a manufacturing operation on said surface (3'),
said device (10') also comprising an articulated arm (2') at the end of which said tool (1') is fastened, the articulated arm (2') being configured so as to apply a push force with an axis (A') to the tool (1'),
and monitoring means configured for the implementation of the steps of the method for pushing the tool (1') according to any of claims 11 to 14.

16. The device (10') according to claim 15, wherein the means for bearing the tool (1') against said surface (3') comprise:
- a first ball joint (12') with a center of rotation (O') corresponding to said first center of rotation (O') of the axis (B') of the tool (1') with respect to the surface (3'), comprising a first portion (15') having an end (E15') intended to bear against said surface (3') and a second portion (16') secured to an intermediate part (19) between said first portion (15') and the support body (11'), the first portion (15') being articulated relative to the second portion (16') according to at least two degrees of freedom, and
- a second ball joint (18) with a center of rotation (018) corresponding to said second center of rotation (018) of the axis (B') of the tool (1') with respect to the surface (3'), comprising a first portion (18A) rigidly fastened to said intermediate part (19) and a second portion (18B) rigidly fastened to the support body (11'), the first portion (18A) being articulated relative to the second portion (18B) according to at least two degrees of freedom.

17. The device (10') according to claim 16, wherein the first portion (15') of the first ball joint (12') comprises a section (S15') substantially forming a convex sphere section, and in particular a half-sphere, from which extends, on one side, the end (E15') intended to bear against the surface (3'), as well as, on the other side, a first sleeve (F15'), configured to internally receive, at least partially, the operative portion of the tool (17'), the first means for measuring the orientation of the normal (N') to the surface (3') with respect to the axis (B') of the tool (1') being configured so as to measure the displacement of said first sleeve (F15') relative to the support body (11'),
wherein said second portion (16') of the first ball joint (12') comprises a section (S16') substantially forming a concave sphere section, and in particular a half-sphere, formed on said intermediate part (19), and configured to cooperate with said section (S15') of the first portion (15') of the first ball joint (12'),
wherein the first portion (18A) of the second ball j oint (18) comprises a section (S18A) substantially forming a convex sphere section formed on said intermediate part (19), and in particular a half-sphere from which extends, opposite to the end (E15') of the first portion (15') of the first ball joint (12'), a sleeve (F19), internally receiving the first sleeve (F15') of the first portion (15') of the first ball joint (12'), the second means for measuring the orientation of the orientation of the line (O'O18) of the tool (1') with respect to the axis (B') of the tool (1') being configured so as to measure the displacement of said second sleeve (F19) relative to the support body (11').

18. The device (10) according to claim 16 or 17, wherein said first ball joint (12') is configured so that the first center of rotation (O') of the first ball joint (12') is disposed at the surface (3') when the end (E15') of the first portion (15') of the first ball joint (12') bears against said surface (3'),
and wherein said second ball joint (18') is configured so that the second center of rotation (018) of the second ball joint (18) is away from the surface (3') and positioned opposite to the tool (1') with respect to the surface (3'), when the end (E15') of the first portion (15') of the ball joint (12') bears against said surface (3').

19. A tool (1') intended to be positioned at the end of an articulated arm (2') to be pushed with a force (F') according to an axis (A') against a surface (3') with a normal (N'), wherein the tool (1') is adapted to pivot relative to the surface (3') when positioned against said surface (3'), according to two distinct centers of rotation: a first center of rotation (O') located on said surface (3') and a second center of rotation (018) away from said surface (3'),
said tool (1') comprising:
- a support body (11') provided with means for measuring a reaction force (R') of a surface (3') on said tool (1'), when the tool (1') bears against said surface (3'),
- means for bearing the tool (1') against said surface (3'), configured so as to achieve bearing of the tool (1') on said surface (3') with a variable orientation of the axis (B') of the tool (1') with respect to the surface (3'), according to two distinct centers of rotation: said first center of rotation (O') located on said surface (3') and said second center of rotation (018) away from said surface (3'),
- first measuring means configured to measure said orientation of the normal (N') of the surface (3') with respect to the axis (B') of the tool (1'), and
- second measuring means configured to measure the orientation of the line (O'O18) with respect to the axis (B') of the tool (1'),
wherein the means for bearing the tool (1') against said surface (3') comprise:
- a first ball joint (12') with a center of rotation (O') corresponding to said first center of rotation (O') of the axis (B') of the tool (1') with respect to the surface (3'), comprising a first portion (15') having an end (E15') intended to bear against said surface (3') and a second portion (16') secured to an intermediate part (19) between said first portion (15') and the support body (11'), the first portion (15') being articulated relative to the second portion (16') according to at least two degrees of freedom, and
- a second ball joint (18) with a center of rotation (018) corresponding to said second center of rotation (018) of the axis (B') of the tool (1') with respect to the surface (3'), comprising a first portion (18A) rigidly fastened to said intermediate part (19) and a second portion (18B) rigidly fastened to the support body (11'), the first portion (18A) being articulated relative to the second portion (18B) according to at least two degrees of freedom.
